# EUROPEAN PATENT APPLICATION

(11) **EP 4 783 529 A1**
(43) Date of publication of application: **29.07.2026**
(21) Application number: 24876065.4
(22) Date of filing: 07.06.2024
(51) Int. Cl.: H04L 41/04

(54) **MANAGEMENT METHOD AND DEVICE FOR NETWORK MANAGEMENT INTENT, AND SYSTEM**

(30) Priority: 13.10.2023 CN 202311331719
(71) Applicant: HUAWEI TECHNOLOGIES CO., LTD., Shenzhen 518129 (CN)
(72) Inventor: LI, Dong, Shenzhen, Guangdong 518129 (CN); LI, Yexing, Shenzhen, Guangdong 518129 (CN); YU, Yijun, Shenzhen, Guangdong 518129 (CN)
(74) Representative: Körber, Martin Hans
(86) International application number: PCT/CN2024/098057
(87) International publication number: WO 2025/077239

(57) **Abstract**

A method and an apparatus for managing a network management intent management, and a system are provided. A consumer entity provides, for a producer entity in an intent creation or modification request message, a trigger condition related to priority adjustment of an intent, so that the producer entity can automatically adjust a priority of the intent when the condition for triggering the priority adjustment of the intent is met. This helps adjust the priority of the intent in a timely manner, to ensure service experience of a customer.

## Description

This application claims priority to Chinese Patent Application No. 202311331719.9, filed with the China National Intellectual Property Administration on October 13, 2023 and entitled "METHOD AND APPARATUS FOR MANAGING NETWORK MANAGEMENT INTENT, AND SYSTEM", which is incorporated herein by reference in its entirety.

### TECHNICAL FIELD

This application relates to the field of communication technologies, and more specifically, to a method and an apparatus for managing a network management intent, and a system.

### BACKGROUND

With development of network resource management, a network management service consumer entity may not directly manage a network resource. The network management service consumer entity may send a message to a network management service producer entity, so that the network management service producer entity executes a network management intent, to achieve an expected objective of a specified performance indicator of a network equipment in a specific range.

In a network resource management process, a priority of the network management intent may need to be adjusted. Based on the foregoing manner of managing the network management intent, the network management service consumer entity may send a corresponding message to the network management service producer entity, to adjust the priority of the network management intent. However, in this manner, the priority of the network management intent may not be adjusted in a timely manner. This affects user experience of a customer.

### SUMMARY

This application provides a method and an apparatus for managing a network management intent, and a system, to help adjust a priority of a network management intent in a timely manner, so as to ensure service experience of a customer.

According to a first aspect, a method for managing a network management intent is provided. The method may be performed by a producer entity. Unless otherwise specified, the "producer entity" may be the producer entity, or may be an apparatus that can support the producer entity in implementing a function.

The method includes: receiving a first trigger condition, where the first trigger condition is a condition for triggering adjustment of a priority of a first network management intent to a first priority; and adjusting the priority of the first network management intent to the first priority in response to determining that the first trigger condition is met.

Based on the foregoing technical solution, the producer entity may receive a trigger condition related to priority adjustment of a network management intent, and automatically adjust a priority of the network management intent when the trigger condition related to the priority adjustment of the network management intent is met. This helps adjust the priority of the intent in a timely manner, to ensure service experience of a customer.

With reference to the first aspect, in some possible implementations, the method further includes: determining that an expectation of the first network management intent for a network conflicts with an expectation of a second network management intent for the network; and performing conflict handling for the first network management intent and the second network management intent based on the first priority.

Based on the foregoing technical solution, when the first network management intent conflicts with the second network management intent, the producer entity may perform the conflict handling for the first network management intent and the second network management intent in response to the priority of the first network management intent being adjusted to the first priority. In other words, when the first trigger condition related to the priority adjustment of the first network management intent is met, the producer entity automatically adjusts the priority of the first network management intent, and triggers the conflict handling for the first network management intent and the second network management intent that conflict with each other. In this way, the producer entity can execute an appropriate network management intent. This helps improve network operation and maintenance efficiency and the service experience of the customer.

With reference to the first aspect or any implementation of the first aspect, in some other possible implementations, the first network management intent is in a suspended state, the second network management intent is in an executed state, and performing the conflict handling for the first network management intent and the second network management intent based on the first priority includes: when the first priority is higher than a priority of the second network management intent, executing the first network management intent and suspending execution of the second network management intent; when the first priority is lower than a priority of the second network management intent, maintaining suspension of execution of the first network management intent and maintaining execution of the second network management intent; or when the first priority is equal to a priority of the second network management intent, maintaining suspension of execution of the first network management intent and maintaining execution of the second network management intent, or performing the conflict handling for the first network management intent and the second network management intent based on an intent preemption capability of the first network management intent and an intent preemption protection capability of the second network management intent.

In the foregoing method, two conflict handling manners are provided. In a first manner, when the first priority is equal to the priority of the second network management intent, the producer entity maintains the suspension of the execution of the first network management intent and maintains the execution of the second network management intent. In a second manner, when the first priority is equal to the priority of the second network management intent, the producer entity further performs the conflict handling for the first network management intent and the second network management intent based on the intent preemption capability of the first network management intent and the intent preemption protection capability of the second network management intent. The first manner has simpler determination logic than the second manner, and the second manner is consistent with an existing conflict handling manner. If the producer entity uses the first manner, determining of the conflict handling can be simplified, and network intent management efficiency can be improved. If the producer entity uses the second manner, it indicates that the technical solution of this application is compatible with the existing conflict handling manner, and a change to existing network management intent management is minor.

With reference to the first aspect or any implementation of the first aspect, in some other possible implementations, performing the conflict handling for the first network management intent and the second network management intent based on the intent preemption protection capability of the second network management intent and the intent preemption capability of the first network management intent includes: when the second network management intent supports preemption by another network management intent and the first network management intent supports preempting another network management intent, executing the first network management intent and suspending the execution of the second network management intent; when the second network management intent does not support preemption by another network management intent, maintaining the suspension of the execution of the first network management intent and maintaining the execution of the second network management intent; or when the second network management intent supports preemption by another network management intent, and the first network management intent does not support preempting another network management intent, maintaining the suspension of the execution of the first network management intent and maintaining the execution of the second network management intent.

With reference to the first aspect or any implementation of the first aspect, in some other possible implementations, the second network management intent is in an executed state, the second network management intent is in a suspended state, and performing the conflict handling for the first network management intent and the second network management intent based on the first priority includes: when the first priority is higher than a priority of the second network management intent, maintaining execution of the first network management intent and maintaining suspension of execution of the second network management intent; when the first priority is lower than a priority of the second network management intent, suspending execution of the first network management intent and executing the second network management intent; or when the first priority is equal to a priority of the second network management intent, maintaining execution of the first network management intent and maintaining suspension of execution of the second network management intent, or performing the conflict handling for the first network management intent and the second network management intent based on an intent preemption protection capability of the first network management intent and an intent preemption capability of the second network management intent.

In the foregoing method, two conflict handling manners are provided. In a first manner, when the first priority is equal to the priority of the second network management intent, the producer entity maintains the execution of the first network management intent and maintains the suspension of the execution of the second network management intent. In a second manner, when the first priority is equal to the priority of the second network management intent, the producer entity performs the conflict handling for the first network management intent and the second network management intent based on the intent preemption protection capability of the first network management intent and the intent preemption capability of the second network management intent. The first manner has simpler determination logic than the second manner, and the second manner is consistent with an existing conflict handling manner. If the producer entity uses the first manner, determining of the conflict handling can be simplified, and network intent management efficiency can be improved. If the producer entity uses the second manner, it indicates that the technical solution of this application is compatible with the existing conflict handling manner, and a change to existing network management intent management is minor.

With reference to the first aspect or any implementation of the first aspect, in some other possible implementations, performing the conflict handling for the first network management intent and the second network management intent based on the intent preemption protection capability of the first network management intent and the intent preemption capability of the second network management intent includes: when the first network management intent does not support preemption by another network management intent, maintaining the execution of the first network management intent and maintaining the suspension of the execution of the second network management intent; when the first network management intent supports preemption by another network management intent and the second network management intent does not support preempting another network management intent, maintaining the execution of the first network management intent and maintaining the suspension of the execution of the second network management intent; or when the first network management intent supports preemption by another network management intent and the second network management intent supports preempting another network management intent, suspending the execution of the first network management intent, and executing the second network management intent.

With reference to the first aspect or any implementation of the first aspect, in some other possible implementations, the method further includes: restoring the priority of the first network management intent to a second priority in response to determining that the first trigger condition is not met, where the second priority is a priority of the first network management intent before adjustment to the first priority.

Based on the foregoing technical solution, the producer entity automatically restores the priority of the network management intent when the trigger condition related to the priority adjustment of the network management intent is no longer met. This helps improve the network operation and maintenance efficiency and the service experience of the customer.

With reference to the first aspect or any implementation of the first aspect, in some other possible implementations, the method further includes: determining that the expectation of the first network management intent for the network conflicts with the expectation of the second network management intent for the network; and performing the conflict handling for the first network management intent and the second network management intent based on the second priority.

Based on the foregoing technical solution, when the first network management intent conflicts with the second network management intent, the producer entity may perform the conflict handling for the first network management intent and the second network management intent in response to the priority of the first network management intent being restored to the second priority. In other words, when the first trigger condition related to the priority adjustment of the first network management intent is no longer met, the producer entity automatically restores the priority of the first network management intent, and triggers the conflict handling for the first network management intent and the second network management intent that conflict with each other. In this way, the producer entity can execute an appropriate network management intent. This helps improve the network operation and maintenance efficiency and the service experience of the customer.

With reference to the first aspect or any implementation of the first aspect, in some other possible implementations, the first trigger condition includes at least one of the following conditions: a constraint condition for a performance indicator of a managed entity of the first network management intent, a time constraint condition, an area constraint condition, a constraint condition for a configuration indicator of a managed entity of the first network management intent, or a weather constraint condition.

Based on the foregoing technical solution, a plurality of types of trigger conditions may be configured for the network management intent, to implement flexible management of the network management intent.

With reference to the first aspect or any implementation of the first aspect, in some other possible implementations, the method further includes: receiving first priority information, where the first priority information indicates the first priority.

Based on the foregoing technical solution, the consumer entity may specify, for the producer entity, a target priority to which the first network management intent is adjusted when the first trigger condition is met. In this way, the target priority can be more appropriate, so that the producer entity executes an appropriate network management intent. This helps improve the network operation and maintenance efficiency and the service experience of the customer.

With reference to the first aspect or any implementation of the first aspect, in some other possible implementations, receiving the first trigger condition and receiving the first priority information include: receiving a first message, where the first message is used to request to create the first network management intent, where the first message includes the first network management intent, the first priority information, and the first trigger condition; or the first message includes the first network management intent, and the first network intent includes the first priority information and the first trigger condition.

Based on the foregoing technical solution, the consumer entity may provide, for the producer entity in a message used to request to create the network management intent, priority information and the trigger condition that are related to the priority adjustment of the network management intent, so that the producer entity can use the priority adjustment solution of the network management intent provided in this application starting from creation of the network management intent.

With reference to the first aspect or any implementation of the first aspect, in some other possible implementations, before receiving the first message, the method further includes: creating and executing the second network management intent; and before adjusting the priority of the first network management intent to the first priority, the method further includes: determining that the expectation of the first network management intent for the network conflicts with the expectation of the second network management intent for the network; and performing the conflict handling for the first network management intent and the second network management intent based on the second priority, where the second priority is the priority of the first network management intent before adjustment to the first priority.

With reference to the first aspect or any implementation of the first aspect, in some other possible implementations, performing the conflict handling for the first network management intent and the second network management intent based on the second priority includes: when the second priority is higher than the priority of the second network management intent, creating and executing the first network management intent, and suspending the execution of the second network management intent; when the second priority is lower than the priority of the second network management intent, based on the first message carrying the first priority information and the first trigger condition, creating the first network management intent and suspending the execution of the first network management intent, and maintaining the execution of the second network management intent; or when the second priority is equal to the priority of the second network management intent, based on the first message carrying the first priority information and the first trigger condition, creating the first network management intent and suspending the execution of the first network management intent, and maintaining the execution of the second network management intent, or performing the conflict handling for the first network management intent and the second network management intent based on the intent preemption protection capability of the second network management intent and the intent preemption capability of the first network management intent.

The method for managing the network management intent in this application supports the automatic adjustment of the priority of the network management intent, and a network management intent with a lower priority may be executed because the priority is adjusted. Based on this, in the foregoing technical solution, a type of determining branch is added to the conflict handling, and a creation and suspension operation is performed on the first network management intent that cannot preempt the second network management intent temporarily, without a creation failure.

With reference to the first aspect or any implementation of the first aspect, in some other possible implementations, performing the conflict handling for the first network management intent and the second network management intent based on the intent preemption protection capability of the first network management intent and the intent preemption capability of the second network management intent includes: when the second network management intent does not support preemption by another network management intent, based on the first message carrying the first priority information and the first trigger condition, creating the first network management intent and suspending the execution of the first network management intent, and maintaining the execution of the second network management intent; when the second network management intent supports preemption by another network management intent and the first network management intent does not support preempting another network management intent, based on the first message carrying the first priority information and the first trigger condition, creating and suspending the execution of the first network management intent and maintaining the execution of the second network management intent; or when the second network management intent supports preemption by another network management intent and the first network management intent supports preempting another network management intent, creating and executing the first network management intent, and suspending the execution of the second network management intent.

The method for managing the network management intent in this application supports the automatic adjustment of the priority of the network management intent, and a network management intent with a lower priority may be executed because the priority is adjusted. Based on this, in the foregoing technical solution, a type of determining branch is added to the conflict handling, and a creation and suspension operation is performed on the first network management intent that cannot preempt the second network management intent temporarily, without a creation failure.

With reference to the first aspect or any implementation of the first aspect, in some other possible implementations, receiving the first trigger condition and receiving the first priority information include: receiving a first message, where the first message is used to request to modify the first network management intent, where the first message includes an identifier of the first network management intent, the first priority information, and the first trigger condition; or the first message includes a modified first network management intent, the first priority information, and the first trigger condition; or the first message includes a modified first network management intent, and the modified first network management intent includes the first priority information and the first trigger condition.

Based on the foregoing technical solution, the consumer entity may provide, for the producer entity in a message used to request to modify the network management intent, priority information and the trigger condition that are related to the priority adjustment of the network management intent. In other words, the consumer entity may modify the priority information and the trigger condition that are related to the priority adjustment of the network management intent, or add the related priority information and trigger condition to the network management intent, so that the producer entity can automatically adjust the priority of the network management intent based on the latest priority information and trigger condition.

With reference to the first aspect or any implementation of the first aspect, in some other possible implementations, after receiving the first message, the method further includes: modifying the first network management intent based on the first message, where the modified first network management intent includes the first priority information and the first trigger condition.

With reference to the first aspect or any implementation of the first aspect, in some other possible implementations, the first network management intent that is not modified includes second priority information and a second trigger condition, the second priority information indicates a third priority, and the second trigger condition is a condition for triggering adjustment of the priority of the first network management intent to the third priority; and modifying the first network management intent based on the first message includes: modifying, based on the first message, the second priority information and the second trigger condition that are included in the first network management intent to the first priority information and the first trigger condition.

According to a second aspect, a method for managing a network management intent is provided. The method may be performed by a consumer entity. Unless otherwise specified, the "consumer entity" may be the consumer entity, or may be an apparatus that can support the consumer entity in implementing a function.

The method includes: determining a first trigger condition, where the first trigger condition is a condition for triggering adjustment of a priority of a first network management intent to a first priority; and sending the first trigger condition.

Based on the foregoing technical solution, the consumer entity may provide a producer entity with the trigger condition related to the priority adjustment of the network management intent, so that the producer entity can automatically adjust the priority of the network management intent when the trigger condition related to the priority adjustment of the network management intent is met. This helps adjust the priority of the intent in a timely manner, to ensure service experience of a customer.

With reference to the second aspect, in some possible implementations, the method further includes: determining first priority information, where the first priority information indicates the first priority; and sending the first priority information.

With reference to the second aspect or any implementation of the second aspect, in some other possible implementations, sending the first trigger condition and sending the first priority information include: sending a first message, where the first message is used to request to create the first network management intent, where the first message includes the first network management intent, the first priority information, and the first trigger condition; or the first message includes the first network management intent, and the first network intent includes the first priority information and the first trigger condition.

With reference to the second aspect or any implementation of the second aspect, in some other possible implementations, sending the first trigger condition and sending the first priority information include: sending a first message, where the first message is used to request to modify the first network management intent, where the first message includes an identifier of the first network management intent, the first priority information, and the first trigger condition; or the first message includes a modified first network management intent, the first priority information, and the first trigger condition; or the first message includes a modified first network management intent, and the modified first network management intent includes the first priority information and the first trigger condition.

With reference to the second aspect or any implementation of the second aspect, in some other possible implementations, the first network management intent that is not modified includes second priority information and a second trigger condition, the second priority information indicates a third priority, and the second trigger condition is a condition for triggering adjustment of the priority of the first network management intent to the third priority.

With reference to the second aspect or any implementation of the second aspect, in some other possible implementations, the first trigger condition includes at least one of the following conditions: a constraint condition for a performance indicator of a managed entity of the first network management intent, a time constraint condition, an area constraint condition, a constraint condition for a configuration indicator of a managed entity of the first network management intent, or a weather constraint condition.

For terms or features in the second aspect or the implementations of the second aspect that are the same as those in the first aspect or the implementations of the first aspect, refer to the first aspect or the implementations of the first aspect. For technical effects of the second aspect or the implementations of the second aspect, refer to technical effects of the first aspect or the implementations of the first aspect. Details are not described in the second aspect again.

According to a third aspect, a method for managing a network management intent is provided. The method may be performed by a producer entity and a consumer entity. Unless otherwise specified, the "producer entity" or the "consumer entity" may be the producer entity or the consumer entity, or may be an apparatus that can support the producer entity or the consumer entity in implementing a function.

The method includes: The consumer entity sends a first trigger condition, where the first trigger condition is a condition for triggering adjustment of a priority of a first network management intent to a first priority; the producer entity receives the first trigger condition; and the producer entity adjusts the priority of the first network management intent to the first priority in response to determining that the first trigger condition is met.

For steps performed by the producer entity in the third aspect or the implementations of the third aspect, refer to the first aspect or the implementations of the first aspect. For steps performed by the consumer entity in the third aspect or the implementations of the third aspect, refer to the second aspect or the implementations of the second aspect. For terms or features in the third aspect or the implementations of the third aspect that are the same as those in the first aspect or the implementations of the first aspect, refer to the first aspect or the implementations of the first aspect. For technical effects of the third aspect or the implementations of the third aspect, refer to technical effects of the first aspect or the implementations of the first aspect. Details are not described in the third aspect again.

According to a fourth aspect, a communication apparatus is provided. The apparatus is configured to perform the method provided in any one of the foregoing aspects or the implementations of the foregoing aspects. Specifically, the apparatus may include a unit and/or a module, for example, a processing unit and/or a transceiver unit, configured to perform the method provided in any one of the foregoing aspects or the implementations of the foregoing aspects.

In an implementation, the apparatus is a producer entity or a consumer entity. When the apparatus is a producer entity or a consumer entity, the transceiver unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in a producer entity or a consumer entity. When the apparatus is a chip, a chip system, or a circuit used in a producer entity or a consumer entity, the transceiver unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a producer entity or a consumer entity.

In another implementation, the apparatus is a chip, a chip system, or a circuit used in a producer entity or a consumer entity.

According to a sixth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a seventh aspect, a processor is provided, and is configured to perform the methods provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to an eighth aspect, a computer-readable storage medium is provided. The computer-readable storage medium stores program code to be executed by a device, and the program code is used to perform the method provided in any one of the foregoing aspects or the implementations of the foregoing aspects.

According to a ninth aspect, a computer program product including instructions is provided. When the computer program product runs on a computer, the computer is enabled to perform the method provided in any one of the foregoing aspects or the implementations of the foregoing aspects.

According to a tenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method of this application is not limited in this application. For example, the method may be performed by one chip, or may be performed by two or more chips. In addition, when there are two or more chips that implement the method of this application, a chip vendor is not limited. The chips may be from a same vendor or from different vendors.

According to an eleventh aspect, a communication system is provided, and includes at least one of the producer entity or the consumer entity described above.

According to a twelfth aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 is a diagram of a structure of an intent IOC;
FIG. 2 is a diagram of a structure of a communication system to which an embodiment of this application is applicable;
FIG. 3 is a schematic flowchart of intent conflict handling;
FIG. 4 is a schematic flowchart of a method 400 for managing a network management intent according to this application;
FIG. 5 is a diagram of intent priority adjustment according to this application;
FIG. 6 is another diagram of intent priority adjustment according to this application;
FIG. 7 is another diagram of intent priority adjustment according to this application;
FIG. 8 is a schematic flowchart of a method 800 for managing a network management intent according to this application;
FIG. 9 is a schematic flowchart of a method 900 for managing a network management intent according to this application;
FIG. 10A and FIG. 10B are a schematic flowchart of intent conflict handling in an intent creation procedure according to this application;
FIG. 11 is a diagram of a structure of an apparatus according to an embodiment of this application;
FIG. 12 is a diagram of another structure of an apparatus according to an embodiment of this application; and
FIG. 13 is a diagram of a chip system according to an embodiment of this application.

### DESCRIPTION OF EMBODIMENTS

Before embodiments of this application are described, the following descriptions are first provided.

"Indicating" or "indicate" may include a direct indication and an indirect indication, or "indicating" or "indicate" may be an explicit indication and/or an implicit indication. Various numerical numbers such as "first" and "second" are merely used for distinguishing for ease of description, and are not intended to limit the scope of embodiments of this application. For example, they are used to distinguish between different messages or different information. "Predefinition" may be implemented by pre-storing corresponding code or a corresponding table in a device, or may be implemented in another manner that may be used for indicating related information. A specific implementation of "predefinition" is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. The words such as "exemplary", "for example", "example", and "in an (another) example" are used to represent giving an example, an illustration, or a description. Any embodiment or design scheme described as an "example" in this application should not be explained as being more preferred or having more advantages than another embodiment or design scheme. The terms "including", "having", and their variants all mean "including but are not limited to", unless otherwise specifically emphasized in another manner. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Related descriptions about sending a message, information, or data by a network element A to a network element B, and receiving, by the network element B, the message, information, or data from the network element A are intended to describe a network element to which the message, information, or data is to be sent. Whether the message, information, or data is directly sent or indirectly sent via another network element is not limited. Descriptions such as "when...", "in a case of...", and "if" all mean that a device performs corresponding processing in an objective case, and are not limited to time, and the device is not required to perform a determining action during implementation. This does not mean that there is another limitation.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The technical solutions of this application may be applied to various network functions virtualisation (network functions virtualisation, NFV) systems. In the systems, current service technical solutions, network construction schemes, and network operation and maintenance methods of an operator may be described as modes and policies in a standard formal language, and the technical solutions and the construction schemes are implemented based on the modes and the policies. For example, the technical solutions in this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, or an open network automation platform (open network automation platform, ONAP) system.

For ease of understanding of embodiments of this application, some terms in embodiments of this application are first explained.

### 1. Network management, network management service, network management service producer entity, and network management service consumer entity

### 1.1 Network management

The network management refers to management of a network resource, including but not limited to monitoring, controlling, and recording performance and usage of the network resource, and delivering a management action group to the network resource (for example, a device in a network) based on a detected network status, to enable the network to run effectively. For example, the network management may be monitoring, testing, configuring, analyzing, evaluating, and controlling the network resource. The network management may alternatively be that when a fault occurs in the network, the fault can be reported and processed in a timely manner, a network system can be coordinated and maintained to run efficiently, and so on. The network resource is an object to which the network management is applied, and may also be referred to as a network object or a managed entity. For example, the network resource may be a base station device, a router, a switch, or a core network device. This is not particularly limited in embodiments of this application. For ease of description, the managed entity is used as an example for description in embodiments of this application, but may be replaced with another object to which the network management is applied.

### 1.2 Network management service

The network management service refers to a service that provides a network management function. A producer entity of the service usually provides the network management function for a consumer entity of the service through a network interface (for example, a service based interface, service based interface).

### 1.3 Network management service producer entity

An entity that provides the network management service is referred to as the network management service producer entity. For example, a capability or a function of the network management service producer entity may be deployed on a network element, and the network element is referred to as a network management service producer network element. Alternatively, a capability or a function of the network management service producer entity may be deployed on another device. This is not limited in embodiments of this application. For ease of description, the network management service producer entity is used as an example for description in embodiments of this application, but may be replaced with another device on which the capability or the function of the network management service producer entity is deployed.

### 1.4 Network management service consumer entity

An entity that invokes the network management is referred to as the network management service consumer entity. For example, a capability or a function of the network management service consumer entity may be deployed on a network element, and the network element is referred to as a network management service consumer network element. Alternatively, a capability or a function of the network management service consumer entity may be deployed on another device. This is not limited in embodiments of this application. For ease of description, the network management service consumer entity is used as an example for description in embodiments of this application, but may be replaced with another device on which the capability or the function of the network management service consumer entity is deployed.

### 2. Network management intent (intent for short)

The network management intent refers to a requirement of the network management service consumer entity for the network management service, and may also be referred to as a network management service requirement. This name is not limited in embodiments of this application. For example, the network management intent may be an intent like an optical private line service intent or an energy saving intent, for example, an intent (intent) defined in the 3rd generation partnership project (3rd generation partnership project, 3GPP) standard specification 28.312.

In an intent-based interaction scenario of this application, two roles are mainly included: a network management provision entity and the network management service consumer entity. The network management provision entity may also be referred to as a network management provider, an intent provider (intent provider), an intent handler (intent handler), or the like. The network management service consumer entity may also be referred to as a network management service consumer, an intent consumer (intent consumer), an intent owner (intent owner), or the like.

The network management service consumer entity may be an invoker of the network management service, and may perform operations such as creation, modification, deletion, and query on a network management intent expression. The network management service consumer entity may be configured in a network management system (network management system, NMS), an element management system (element management system, EMS), or a network equipment (network equipment, NE), and may be a management function, a management function entity, a management entity, a network equipment, a network element, or the like. This is not limited in this application.

The intent may be applied to the network system, to achieve an expected objective of a specified performance indicator of the network equipment in a specific range. The intent may express an expectation for the network system by using a formal specification and description information. The formal specification may refer to intent-specific syntax or semantics, and the description information may be used to describe a requirement, a target, and a constraint of the intent.

The intent may include at least one intent expectation. Each intent expectation may represent a performance requirement of the network management service consumer entity for a specific network object. One intent expectation may include at least one expectation target and an expectation object, and each expectation target may represent a performance requirement of the network management service consumer entity for a specific attribute of the expectation object. For example, the intent expectation may include two expectation targets. One expectation target is that an average downlink throughput is greater than 5 Mbps, and the other expectation target is that an end-to-end delay is less than 10 milliseconds. If the average downlink throughput of the expectation object is greater than 5 Mbps, the expectation target for the downlink throughput is met. If the end-to-end delay of the expectation object is less than 10 milliseconds, the expectation target for the delay is met. If the two expectation targets of the intent expectation are met, the intent expectation is achieved.

The intent may further include an intent context. The intent context may represent a constraint or a condition of the network management service consumer entity for the intent. For example, the network management service consumer entity may restrict applied duration of the intent by using the intent context.

The intent may further include an expectation context. The expectation context may represent a constraint or a condition of the network management service consumer entity for an intent expectation. For example, the network management service consumer entity may restrict applied duration of the intent expectation by using the expectation context.

The intent may further include a target context. The target context may represent a constraint or a condition of the network management service consumer entity for an expectation target. For example, the network management service consumer entity may restrict applied duration of the expectation target by using the target context.

The intent may further include an object context. The object context may represent a constraint or a condition of the network management service consumer entity for a network object to which the intent is applied. For example, the network management service consumer entity may indicate, by using the object context, an area in which the network object to which the intent is applied is located.

The intent expectation, the expectation target, and the intent context described above may be used as information elements in an information object class (information object class, IOC) in an intent creation request. The network management service consumer entity may send the information elements to the network management service producer entity, to express a requirement for the network management service.

The information element in the intent IOC may express the requirement for the network management service by using a specific structure.

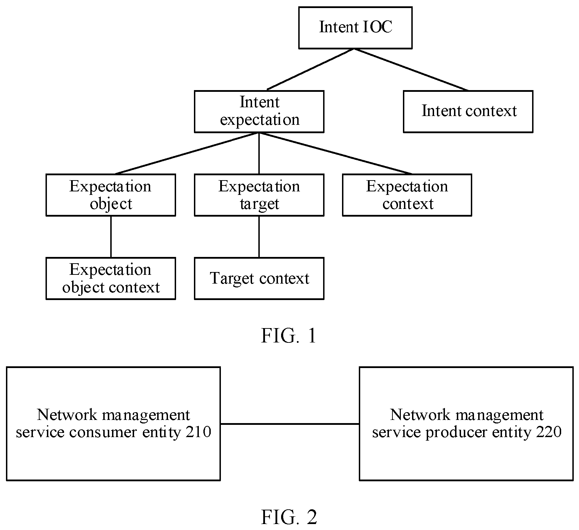

For example, FIG. 1 is a diagram of a structure of an intent IOC.

Refer to FIG. 1. The intent IOC includes an intent expectation and an intent context. The intent expectation includes an expectation object, an expectation target, and an expectation context. The expectation object includes an expectation object context, and the expectation target includes a target context. It may be understood that an information element (for example, the intent IOC, the intent expectation, the expectation object, or the expectation target) of a non-context type may include an information element (for example, the intent context, the expectation object context, the target context, or the expectation context) of a context type, and the information element of the context type can be used to restrict the information element of the non-context type.

It may be understood that FIG. 1 schematically describes a relationship between attributes in the intent IOC. Based on a network management service requirement, the intent IOC may further include another attribute. This is not particularly limited in this application. It may be further understood that a quantity of attributes of a same type is not particularly limited in this application. For example, one intent IOC may include one or more parallel intent expectation attributes, and one intent expectation may also include one or more parallel expectation target attributes.

### 3. Network management intent template

The network management intent template refers to sample description information of the network management intent, and may also be referred to as a network management service requirement template. This name is not limited in embodiments of this application. The intent template may be used to specify syntax and semantics of various attribute expressions described above. For example, the intent template may specify a field type and a value type that may be used for each attribute in the IOC. In an example, the intent template may include intent expectation description information used to specify how the intent expectation is expressed. The intent expectation description information may specify a type of an expectation target attribute, for example, a delay, bandwidth, or a maximum quantity of users, that may be included in the intent expectation. The intent expectation description information may further specify a field type of each expectation target. For example, a field type of an expectation target about the delay is a character string, a field type of an expectation target about the bandwidth is a character string, and a field type of an expectation target about the maximum quantity of users is an integer. In another example, the intent template may further include intent context description information for specifying how the intent context and the expectation context are expressed. The intent context description information may be used to specify a field type of the intent context, and the like. This is not particularly limited in this application.

### 4. Intent expression

In embodiments of this application, the intent expression is an informational expression for expressing a network management service intent, and may be an instantiation result of the network management intent template. A consumer of the network management intent can instantiate the intent IOC based on the intent template to generate the intent expression. The intent expression generated through instantiation can be used for a specific network service. For example, the intent expression may be represented by a list of a group of attributes and key-value pairs (for example, a group of [attribute, value]) of the network management service intent.

For example, the intent expression includes a performance indicator information instance, a network object information instance, and a context information instance.

For example, the performance indicator information instance may include a value or a value range of a target indicator requirement corresponding to performance indicator information. For example, a target indicator requirement corresponding to a performance indicator information template includes a bandwidth parameter, and the performance indicator information instance includes that a value of the bandwidth parameter is 20 M, or a value range of the bandwidth parameter is 10 M to 15 M. For example, the target indicator requirement corresponding to the performance indicator information template includes a delay parameter, and a delay parameter instance includes that a value of the delay parameter is 2s, or a value range of the delay parameter is 1s to 5s.

A target network object indicated by the network object information instance is an instantiation result of a target network object indicated by a network object information template. For example, the target network object indicated by the network object information instance is one of target network objects indicated by the network object information template, in other words, indicates one of a physical entity or a logical entity that implements the network management service. In this case, the network object information instance indicates a specific network object. For example, the network object information template indicates a network service, and the network object information instance indicates an energy saving service.

The context information instance indicates a constraint condition for the network management intent expression. For example, the context information instance includes a constraint parameter of a network management intent expression. For example, the context information instance may include information about a source end and a sink end that correspond to the target network object indicated by the network object instance.

An intent expectation information instance includes the performance indicator information instance and the network object information instance.

In embodiments of this application, an "intent" transmitted by using a message is an intent expression.

### 5. Network management intent instance

The network management intent instance refers to a network management intent processing process locally created by a network management service provision entity based on the received network management intent expression (for example, the performance indicator information instance, the network object information instance, or the context information instance).

The network management intent processing process is used to process the network management intent expression. For example, the network management intent processing process may include an identifier, and the identifier identifies the process. The network management intent processing process may include a computing resource, and the computing resource is used to perform operations such as network management intent translation and database (for example, semantic knowledge base) query. The network management intent processing process may include a storage resource, and the storage resource is used to store the network management intent expression, a result of the network management intent translation, and the like.

The network management intent translation is performed to convert the network management intent expression into a corresponding management action group. The management action group may be instructions that are applied to the physical entity or the logical entity, for example, adjusting an antenna tilt angle of a base station or turning on an energy saving switch of a cell.

### 6. Network management action group (actions)

The network management action group is one or more network management actions generated by the network management service producer entity based on the intent expression. The network management service producer entity performs the one or more network management actions to meet an intent of the network management service consumer entity. The network management action group may also be referred to as a management operation or an intent operation. The network management action group may be an operation instruction set for the expectation object (for example, a physical entity or a logical entity to which the intent is applied and that is in the network system), and includes one or more instructions, for example, adjusting an antenna tilt angle of a base station or turning on an energy saving switch of a cell.

The network management service producer entity may generate a plurality of management action groups based on the intent expression. In an execution process, the network management service producer entity may select some management action groups from the plurality of management action groups at one time for execution. In other words, the management action group generated by the network management service producer entity based on the intent expression translation is an optional operation that can be performed to meet the intent. The network management service producer entity may select one of the network management action groups for execution to meet the intent, or may select a network management action group for a plurality of times for execution to meet the intent.

### 7. Intent management state

The intent management state (intentAdminState) may include an activated (activated) state and a de-activated (de-activated) state. If it is desired to use or execute the intent, the network management service producer entity may configure the intent management state to the activated state. If it is desired to suspend or disable the intent, the network management service producer entity may configure the intent management state to the de-activated state. The de-activated state may be replaced with a suspended (suspended) state.

That the intent is in the activated state may indicate that the network management service producer entity configures the managed entity based on a target of meeting the intent expectation or the expectation target. For example, the network management service producer entity may determine the management action group based on the intent expectation or the expectation target, and deliver the management action group to the managed entity. The managed entity executes the management action group, to meet the intent expectation or the expectation target. For example, the network management service producer entity receives an energy saving intent, and an intent expectation target is to reduce average power consumption by 30%. When the energy saving intent is activated, the network management service producer entity determines, based on the intent expectation target, that the managed entity turns off a power amplifier of a radio frequency module, and sends an instruction of "turning off the power amplifier of the radio frequency module" to the managed entity. The managed entity turns off the power amplifier of the radio frequency module based on the instruction, to meet the intent expectation target of reducing the average power consumption by 30%.

That the intent is in the de-activated state may indicate that the network management service producer entity retains context information of the intent and suspends maintaining the intent expectation, or the intent expectation target is met. For example, when the intent is in the de-activated state, even if the intent expectation target is not met, the network management service producer entity does not determine the management action group based on the intent expectation target. For example, when the energy saving intent changes from the activated state to the de-activated state, the network management service producer entity may not need to maintain the intent expectation target of reducing the average power consumption by 30%, and the network management service producer entity may indicate the managed entity to turn on the power amplifier of the radio frequency module, or maintain a configuration used before the de-activated state is entered (in other words, no additional instruction is delivered based on the intent).

### 8. Intent conflict

The intent conflict includes but is not limited to the following scenarios: A conflict (an intent conflict) exists between expectations of different intents for a network, a conflict (an expectation conflict) exists between expectations of different intent expectations of a same intent for a network, or a conflict (target conflict) exists between expectations of different expectation targets of a same intent for a network. "A conflict exists between expectations for a network" may include at least one of the following: Requirements for a network management service conflict, performance requirements for a network object conflicts, or functions of network management services conflict. The following describes several possible conflict cases of the intent conflict by using examples. In a first possible case, an intent expectation or a target of an intent semantically conflicts with another intent currently being executed. For example, if a target included in an energy saving intent is that physical resource block utilization is less than or equal to 20%, but a target included in a throughput intent currently being executed by the producer entity is that physical resource block utilization is greater than 40%, the producer entity may semantically determine that the network management intent conflicts with another network management intent. In a second possible case, an action group determined by the producer entity based on an intent conflicts with an action group determined based on another intent. For example, the producer entity executes an energy saving intent and a bandwidth assurance intent. To achieve the energy saving intent, the producer entity needs to execute an action group (for example, a carrier shutdown operation or a power-off operation). These action groups cause a network bandwidth decrease, and consequently, a target of the bandwidth assurance intent cannot be achieved.

Embodiments of this application mainly relate to a scenario in which expectations of different intents for a network conflict.

The foregoing describes related terms in embodiments of this application. The following describes, with reference to FIG. 2, an application scenario to which embodiments of this application are applicable.

FIG. 2 is a diagram of a structure of a communication system to which an embodiment of this application is applicable. Apparatuses that may be used in the communication system are first described.
1. A network management service consumer entity 210 may be configured to: invoke a management service, or invoke an intent service to manage a network system. For example, the network management service consumer entity 210 may instantiate an intent template, set an intent IOC to generate an intent expression, and send the intent expression to a network management service producer network element 220, to achieve an expectation for the network system.
   The network management service consumer entity 210 may also be referred to as a network management service consumer network element, a network management service consumer, an intent management service consumer (intent management service consumer), an intent consumer (intent consumer), an intent owner (intent owner), or the like. In a future communication system, the network management service consumer entity may have another name. This is not particularly limited in this application.
2. The network management service producer entity 220 may be configured to provide the management service. For example, the network management service producer entity 220 may receive the intent expression from the network management service consumer entity 210, and perform, based on the intent expression, procedures of intent translation, intent management, and intent execution and maintenance.

The network management service producer entity 220 may also be referred to as a network management service producer network element, an intent management service provider (intent management service provider), a network management service producer, an intent provider (intent provider), an intent handler (intent handler), or the like. In the future communication system, the network management service producer entity may have another name. This is not particularly limited in this application.

The entities may be network elements in a hardware device, or may be software functions running on dedicated hardware, or may be virtualization functions instantiated on a platform (for example, a cloud platform). It may be understood that the entities may be implemented by one device, or may be implemented by a plurality of devices together. In addition, the entities may alternatively be functional modules in a system, for example, functional modules in a network management system (network management system, NMS), an equipment management system (equipment management system, EMS), or a device, for example, one or more functional modules in a network equipment (network equipment, NE). The network equipment may be a base station or a core network element.

In an example, the network management service consumer entity 210 may be deployed in the NMS, the network management service producer entity 220 may be deployed in different EMSs, and information exchange between the network management service consumer entity 210 and the network management service producer entity 220 may be performed through an interface between the NMS and the EMS.

In another example, the network management service consumer entity 210 may be deployed in the EMS, the network management service producer entity 220 may be deployed in different NEs, and information exchange between the network management service consumer entity 210 and the network management service producer entity 220 may be performed through an interface between the NEs and the EMS.

The solutions of this application may be further applied to another system including a corresponding entity. This is not limited in this application, and is not specifically limited in this embodiment of this application.

For ease of description, a network management intent is referred to as an intent for short, a network management service consumer entity is referred to as a consumer entity for short, and a network management service producer entity is referred to as a producer entity for short.

Currently, in a scenario in which expectations of different intents for a network conflict, the conflict between the intents is processed based on a priority mechanism and by introducing a series of parameters. These parameters include an intent priority (intent priority level) parameter, an intent preemption capability (intent preemption capability) parameter, and an intent preemption protection (intent preemption protection) parameter. The intent priority parameter indicates a priority of an intent. The intent preemption capability parameter indicates an intent preemption capability of an intent, and a value may be "be triggered (be triggered)" or "shall be not triggered (shall be not triggered)". That the intent preemption capability of the intent is "be triggered" may mean that the intent supports preempting another intent, and that the intent preemption capability of the intent is "shall be not triggered" may mean that the intent does not support preempting another intent. The intent preemption protection parameter indicates an intent preemption protection capability of an intent, and a value may be "preemptable (preemptable)" or "not preemptable (not preemptable)", or may be "protected" or "not protected". That the intent preemption protection capability of the intent is "preemptable" may mean that the intent supports preemption by another intent, and that the intent preemption protection capability of the intent is "not preempted" may mean that the intent does not support preemption by another intent. That one intent successfully preempts another intent means that the intent that successfully performs preemption is executed, and the preempted intent is not executed. The preempted intent may be paused during execution, suspended, de-activated, or deleted. This is not limited.

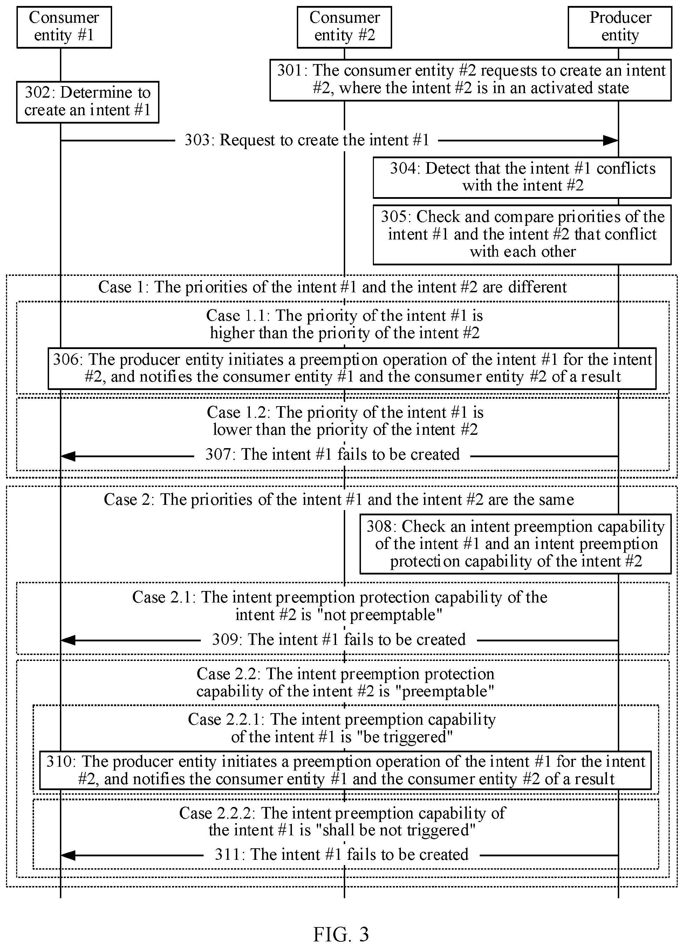

The following describes a current intent conflict handling manner with reference to FIG. 3.

FIG. 3 is a schematic flowchart of intent conflict handling.

Step 301: A consumer entity #2 requests a producer entity to create an intent #2, where the intent #2 is in an activated state.

In other words, the producer entity creates the intent #2 based on a request of the consumer entity #2, and executes the intent #2.

Step 302: A consumer entity #1 determines to create an intent #1.

Step 303: The consumer entity #1 requests the producer entity to create the intent #1.

Step 304: The producer entity detects that the intent #1 conflicts with the intent #2 that is being executed.

The intent #2 is an existing intent, and the intent #1 is a to-be-created new intent.

Step 305: The producer entity checks and compares priorities of the intent #1 and the intent #2 that conflict with each other.

Specifically, the producer entity compares a value of an intent priority level parameter of the intent #1 with a value of an intent priority level parameter of the intent #2.

There may be two comparison results, as shown in a case 1 and a case 2 below.

Case 1: The priorities of the intent #1 and the intent #2 are different. For example, the value of the intent priority level parameter of the intent #1 is different from the value of the intent priority level parameter of the intent #2.

In the case 1, there may be a case 1.1 and a case 1.2. Details are as follows:
Case 1.1: The priority of the intent #1 is higher than the priority of the intent #2. For example, the value of the intent priority level parameter of the intent #1 is greater than the value of the intent priority level parameter of the intent #2.

If the priority of the intent #1 is higher than the priority of the intent #2, the intent #1 may preempt the intent #2, and step 306 may be subsequently performed. Step 306 is as follows:
Step 306: The producer entity initiates a preemption operation of the intent #1 for the intent #2, and notifies the consumer entity #1 and the consumer entity #2 of a result.

That the producer entity initiates the preemption operation of the intent #1 for the intent #2 may mean that the producer entity suspends execution of the intent #2 and executes the intent #1. Notifying the consumer entity #1 and the consumer entity #2 of the result may mean that the producer entity indicates, to the consumer entity #1, that the intent #1 is successfully created and the intent #1 is in the activated state, and indicates, to the consumer entity #2, that the intent #2 is in a de-activated state.

Case 1.2: The priority of the intent #1 is lower than the priority of the intent #2. For example, the value of the intent priority level parameter of the intent #1 is less than the value of the intent priority level parameter of the intent #2.

If the priority of the intent #1 is lower than the priority of the intent #2, the intent #1 cannot preempt the intent #2, and step 307 may be subsequently performed. Step 307 is as follows:
Step 307: The producer entity skips creating the intent #1, and indicates, to the consumer entity #1, that the intent #1 fails to be created.

Case 2: The priorities of the intent #1 and the intent #2 are the same. For example, the value of the intent priority level parameter of the intent #1 is the same as the value of the intent priority level parameter of the intent #2.

When the priorities of the intent #1 and the intent #2 are the same, the producer entity may further perform conflict handling based on an intent preemption protection capability of the intent #2 and an intent preemption capability of the intent #1. The producer entity may perform step 308. Step 308 is as follows:
Step 308: The producer entity checks the intent preemption protection capability of the intent #2 and the intent preemption capability of the intent #1, and further performs the conflict handling based on the intent preemption protection capability of the intent #2 and the intent preemption capability of the intent #1.

Specifically, the producer entity obtains and checks a value of an intent preemption protection parameter of the intent #2 and a value of an intent preemption capability parameter of the intent #1, and then performs conflict handling based on the value of the intent preemption protection parameter of the intent #2 and the value of the intent preemption capability parameter of the intent #1.

In this way, based on the intent preemption protection capability of the intent #2, the case 2 may further include a case 2.1 and a case 2.2. Details are as follows:
Case 2.1: The intent preemption protection capability of the intent #2 is "not preemptable". For example, the value of the intent preemption protection parameter of the intent #2 is "not preemptable". In this case, the intent #1 cannot preempt the intent #2, and step 309 may be subsequently performed. Step 309 is as follows:
Step 309: The producer entity skips creating the intent #1, and indicates, to the consumer entity #1, that the intent #1 fails to be created.

Case 2.2: The intent preemption protection capability of the intent #2 is "preemptable". For example, the value of the intent preemption protection parameter of the intent #2 is "preemptable". Based on the intent preemption capability of the intent #1, the case 2.2 may further include a case 2.2.1 and a case 2.2.2. Details are as follows:
Case 2.2.1: The intent preemption capability of the intent #1 is "be triggered". For example, the value of the intent preemption capability parameter of the intent #1 is "be triggered". In this case, the intent #1 may preempt the intent #2, and step 310 may be subsequently performed. Step 310 is as follows:
Step 310: The producer entity initiates a preemption operation of the intent #1 for the intent #2, and notifies the consumer entity #1 and the consumer entity #2 of a result.

Case 2.2.2: The intent preemption capability of the intent #1 is "shall be not triggered". For example, the value of the intent preemption capability parameter of the intent #1 is "shall be not triggered". In this case, the intent #1 cannot preempt the intent #2, and step 311 may be subsequently performed. Step 311 is as follows:
Step 311: The producer entity skips creating the intent #1, and indicates, to the consumer entity #1, that the intent #1 fails to be created.

It can be learned from FIG. 3 that the current intent conflict handling manner is as follows: When a conflict between intents is detected, execution of a higher-priority intent is preferentially ensured. If priorities of the conflicting intents are the same, whether a to-be-created new intent preempts an existing intent is further determined based on an intent preemption protection capability of the existing intent and an intent preemption capability of the to-be-created new intent. Details are shown in Table 1. An attribute of an intent may be represented by a parameter of the intent.

**Table 1 Conflict handling policy table**

| Intent | New intent | Existing intent | Conflict resolution operation |
|---|---|---|---|
| Attribute | Intent preemption capability | Intent preemption protection capability | |
| | Be triggered | Preemptable | Preemption |
| | | No preemption | No preemption |
| | Shall be not triggered | / | No preemption |

Currently, in a network resource management process, a priority of an intent may need to be adjusted. For example, it is assumed that in the intent conflict handling manner shown in FIG. 3, the new intent #1 successfully preempts the existing intent #2 and is executed. At a subsequent moment or in a subsequent time period, an emergency occurs in a service area corresponding to the intent #1 and the intent #2, and the preempted intent #2 needs to be re-activated to ensure service stability of an operator. In this case, the priority of the intent #2 may be adjusted, to re-activate the intent #2. A current manner of adjusting the priority of the intent is as follows: Operation and maintenance personnel go to the site, and actively deliver, to the producer entity by using the consumer entity corresponding to the intent #2, an instruction for modifying the priority of the intent #2, to adjust the priority of the intent #2, so as to trigger the producer entity to perform intent conflict handling for the intent #1 and the intent #2 again. In this process, if the emergency is not perceived in a timely manner and/or the operation and maintenance personnel do not perform operations in a timely manner, the priority of the intent #2 is not adjusted in a timely manner. Consequently, service experience of a customer deteriorates. For example, in an area, the service assurance intent #2 is preempted by the energy saving intent #1, and a sudden surge in a quantity of people occurs in the area in a subsequent time period. As a result, a capacity or traffic requirement of the area increases sharply. In this case, when the operation and maintenance personnel adjust the priority of the intent #2 by using the consumer entity, and restore the execution of the intent #2, a large quantity of customers may be disconnected from a network or network access freezing may occur.

To resolve the foregoing problem, this application provides a method and an apparatus for managing a network management intent, and a system, so that a producer entity can automatically adjust a priority of the intent. This helps adjust the priority of the intent in a timely manner, and ensures service experience of a customer.

The following describes method embodiments of this application.

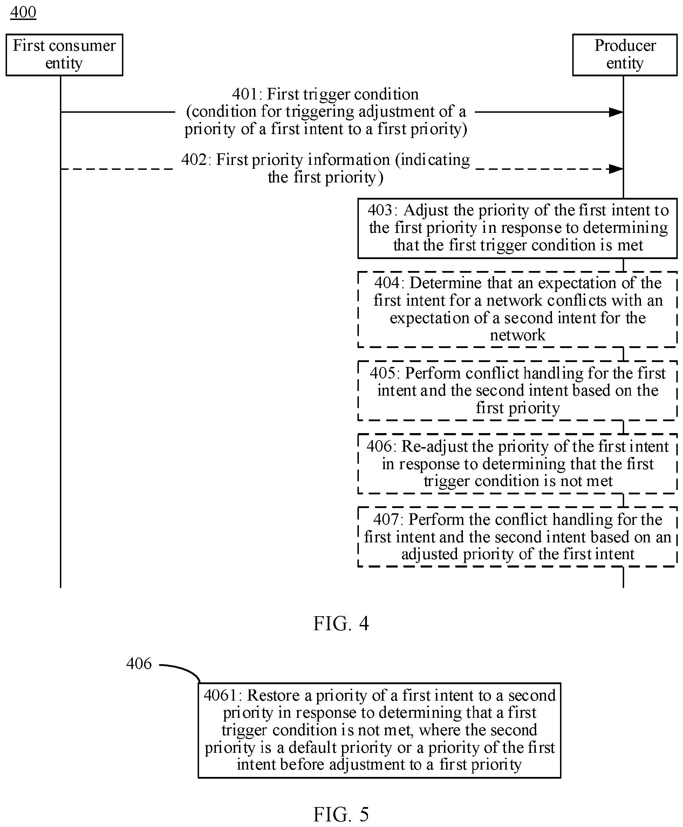

FIG. 4 is a schematic flowchart of a method 400 for managing a network management intent according to this application.

The method shown in FIG. 4 may be performed by a producer entity or a consumer entity. Unless otherwise specified, the "producer entity" or the "consumer entity" may be the producer entity or the consumer entity, or may be an apparatus that can support the producer entity or the consumer entity in implementing a function. For ease of description, the following uses the producer entity and the consumer entity for description. The method 400 may include at least a part of the following content.

Step 401: The consumer entity sends a first trigger condition to the producer entity, in other words, the producer entity receives the first trigger condition from the consumer entity.

The first trigger condition is a condition for triggering adjustment of a priority of a first network management intent to a first priority. For example, the first priority may be specified by the consumer entity by using signaling, or may be preconfigured. This is not limited.

For example, the first trigger condition may include a plurality of types of constraint conditions used to trigger the adjustment of the priority of the first network management intent to the first priority. In a possible manner, the first trigger condition may include at least one of the following types of conditions: a constraint condition for a performance indicator of a managed entity of a first intent, a time constraint condition, an area constraint condition, a constraint condition for a configuration indicator of a managed entity of a first intent, or a weather constraint condition.

For example, the first trigger condition may be the constraint condition for the performance indicator of the managed entity of the first intent. For example, for a network management intent of an energy saving type, the constrained performance indicator may be an energy saving related performance indicator (for example, a network capacity indicator like physical resource block utilization or an activity factor). When the performance indicator is greater than or equal to a specific threshold, the producer entity determines that the first trigger condition is met, and adjusts a priority of the first intent to the first priority corresponding to the first trigger condition in response to the first trigger condition being met.

For another example, the first trigger condition is the time constraint condition. The first trigger condition may indicate the producer entity to adjust a priority of the first intent to time or a moment of the first priority. For example, the first trigger condition indicates the producer entity to adjust the priority of the first intent of an energy saving type to the first priority with a higher level at 10:00 every night.

For another example, the first trigger condition may be the constraint condition for the configuration indicator of the managed entity of the first intent. For example, for an intent of an energy saving type, the constrained configuration indicator may be an energy saving related configuration indicator, for example, a quantity of configured subcarriers. When the performance indicator is greater than or equal to a specific threshold, the producer entity determines that the first trigger condition is met, and adjusts a priority of the first intent to the first priority corresponding to the first trigger condition in response to the first trigger condition being met. The quantity of subcarriers is used as an example. When the quantity of configured subcarriers increases, it is more difficult to achieve a target of the intent of the energy saving type. When the quantity of subcarriers is greater than a threshold, to ensure that the intent of the energy saving type can be achieved, the priority of the intent may be triggered to increase.

For another example, the first trigger condition is the weather constraint condition. The first trigger condition may indicate the producer entity to adjust a priority of the first intent to weather of the first priority. For example, the first trigger condition indicates the producer entity to adjust the priority of the first intent of a bandwidth assurance type to the first priority with a higher level in rainy and snowy weather.

For another example, the first trigger condition may include a combination of the constraint condition for the performance indicator of the managed entity of the first intent and the area constraint condition. When both the constraint condition for the performance indicator and the area constraint condition are met, the producer entity adjusts a priority of the first intent to the first priority. For example, in an area A, if the performance indicator is greater than or equal to a specific threshold, the producer entity determines that the first trigger condition is met, and adjusts the priority of the first intent to the first priority in response to the first trigger condition being met.

For another example, the first trigger condition may include a combination of the time constraint condition and the area constraint condition. When both the time constraint condition and the area constraint condition are met, the producer entity adjusts a priority of the first intent to the first priority. For example, in an area A, the producer entity adjusts the priority of the first intent to the first priority at 10:00 every night.

For another example, the first trigger condition may include a combination of the constraint condition for the performance indicator of the managed entity of the first intent and the time constraint condition. When both the constraint condition for the performance indicator and the time constraint condition are met, the producer entity adjusts a priority of the first intent to the first priority. For example, at 10:00 every night, if the performance indicator is greater than or equal to a specific threshold, the producer entity determines that the first trigger condition is met, and adjusts the priority of the first intent to the first priority in response to the first trigger condition being met.

It may be understood that the first trigger condition may be expressed based on a context template of the intent. For example, when the first trigger condition is the constraint condition for the performance indicator of the managed entity of the first intent, the first trigger condition may include information such as a type of the performance indicator and a performance indicator range, so that the producer entity may obtain a performance indicator value of the managed entity based on the type of the performance indicator, and determine, depending on whether the performance indicator value is within the performance indicator range, whether to adjust the priority of the first intent to the first priority.

It may be further understood that the name "trigger condition" is merely an example rather than a limitation, and is also referred to as, for example, an "activation condition", a "start condition", or an "initiation condition".

For example, the first trigger condition may be a priority adjustment context (priorityAdjustedContext) parameter, and a value of the priority adjustment context parameter may be a specific value or a percentage. For example, the first trigger condition may be one or more of a quantity of service area access requests, a service area bandwidth value, or service area power consumption.

Optionally, in step 402, the consumer entity sends first priority information to the producer entity, in other words, the producer entity receives the first priority information from the consumer entity.

The first priority information indicates the first priority. In other words, the consumer entity may specify, for the producer entity, a target priority to which the first network management intent is adjusted when the first trigger condition is met. The first priority information may be associated with the first trigger condition. The first priority may be lower than a current priority of the first intent, or may be higher than a current priority of the first intent. This is not limited.

For example, the first priority information may be a priority adjustment level (priorityAdjustedLevel) parameter of the first intent, and the first priority indicated by the first priority information may be a target priority to which the first intent can be adjusted in a priority adjustment process. A name of the priority adjustment level parameter is not limited in embodiments of this application. In a future communication system, the priority adjustment level parameter may have another name.

Table 2 is a table of reference information elements of the first priority information and the first trigger condition. CM represents conditional-mandatory (Conditional-Mandatory), T represents true (true), and F represents false (false).

**Table 2**

| No. | Parameter name | support qualifier (support qualifier) | isReadable (isReadable) | isWritable (isWritable) | isInvariant (isInvariant) | isNotifyable (isNotifyable) |
|---|---|---|---|---|---|---|
| 1 | priorityAdjustedLevel | CM | T | T | F | F |
| 2 | priorityAdjustedContext | CM | T | T | F | F |

In embodiments of this application, a "parameter" may be replaced with an "information element", an "attribute", or the like.

A manner in which the consumer entity sends the first priority information and the first trigger condition to the producer entity is not limited in embodiments of this application.

For example, the consumer entity may send the first priority information and/or the first trigger condition to the producer entity as separate information.

For example, the consumer entity may send the first priority information and the first trigger condition to the producer entity by using different messages.

For example, the consumer entity may include the first priority information and the first trigger condition in a same message.

A message type of the message carrying the first priority information and/or the first trigger condition is not limited in embodiments of this application. The message may be any message related to intent management. The message is referred to as a first message below, and an example in which the first message carries the first priority information and the first trigger condition is used for description.

For example, the first message may be used to create or request to create the first intent. For example, the first message is an intent creation request message.

When the first message is used to create or request to create the first intent, there are many manners in which the first message carries the first priority information and the first trigger condition. This is not limited. In a possible implementation, the first message may include the first intent, the first priority information, and the first trigger condition, and the first intent may be represented as an instantiated intent IOC (as shown in FIG. 1). In another possible implementation, the first message may include the first intent, the first intent includes the first priority information and the first trigger condition, and the first intent may be represented as an instantiated intent IOC (as shown in FIG. 1). For example, the intent IOC corresponding to the first intent includes an intent expectation and an intent context, and the intent context includes the first priority information and the first trigger condition. For another example, the intent IOC corresponding to the first intent includes an intent expectation, the intent expectation includes an expectation context, and the expectation context includes the first priority information and the first trigger condition. For still another example, the intent IOC corresponding to the first intent includes an intent expectation, the intent expectation includes an expectation target, the expectation target includes a target context, and the target context includes the first priority information and the first trigger condition.

When the first message is used to create or request to create the first intent, after receiving the first message, the producer entity may create the first intent based on the first message. The created first intent includes the first priority information and the first trigger condition. Subsequently, the producer entity may determine, based on the first trigger condition, whether the priority of the first intent needs to be adjusted to the first priority indicated by the first priority information.

For example, the first message may be used to modify or request to modify the first intent. For example, the first message is an intent modification request message.

When the first message is used to modify or request to modify the first intent, there are many manners in which the first message carries the first priority information and the first trigger condition. This is not limited. In a possible implementation, the first message may include an identifier of the first intent, the first priority information, and the first trigger condition. In another possible implementation, the first message may include an identifier of an intent expectation of the first intent, the first priority information, and the first trigger condition. In another possible implementation, the first message may include an identifier of an expectation target of the first intent, the first priority information, and the first trigger condition. In another possible implementation, if the first message carries a modified intent IOC to implement a modification function, the first priority information and the first trigger condition may alternatively be included in the intent IOC of the first intent.

When the first message is used to modify or request to modify the first intent, before receiving the first message, the consumer entity may further send, to the producer entity, a message used to create or request to create the first intent (which is referred to as a second message for short below), and the producer entity may create the first intent based on the second message. After receiving the first message, the producer entity may modify the created first intent based on the first message. A modified first intent includes the first priority information and the first trigger condition.

Optionally, the second message may carry second priority information and a second trigger condition that are related to priority adjustment. In this case, the first intent created based on the second message includes the second priority information and the second trigger condition, the second priority information indicates a third priority, and the second trigger condition is a condition for triggering adjustment of the priority of the first intent to the third priority. For descriptions of the second priority information and the second trigger condition, refer to the first priority information and the first trigger condition. Details are not described again. In this case, that the producer entity modifies the first intent based on the first message may include: The producer entity modifies, based on the first message, the second priority information and the second trigger condition that are included in the first intent to the first priority information and the first trigger condition. Subsequently, the producer entity may determine, based on the first trigger condition, whether the priority of the first intent needs to be adjusted to the first priority indicated by the first priority information.

Optionally, the second message does not carry priority information or a trigger condition that is related to priority adjustment. In this case, that the producer entity modifies the first intent based on the first message may include: The producer entity adds the first priority information and the first trigger condition to the first intent based on the first message. Subsequently, the producer entity may determine, based on the first trigger condition, whether the priority of the first intent needs to be adjusted to the first priority indicated by the first priority information.

Step 403: The producer entity adjusts the priority of the first intent to the first priority in response to determining that the first trigger condition is met.

"In response to determining that the first trigger condition is met" may be replaced with "when the first trigger condition is met", "in response to the first trigger condition being met", "determining that the first trigger condition is met", or the like. This is not limited.

Optionally, after step 403, the producer entity may further perform step 404 and step 405. Details are as follows:
Step 404: The producer entity determines that an expectation of the first intent for a network conflicts with an expectation of a second intent for the network.

For detailed descriptions of the conflict between the expectations of the first intent and the second intent for the network, refer to the term description part. Details are not described herein again.

A manner in which the producer entity determines that the expectation of the first intent for the network conflicts with the expectation of the second intent for the network is not limited in embodiments of this application. For example, the producer entity has performed conflict handling for the first intent and the second intent, and the producer entity has recorded that the expectation of the first intent for the network conflicts with the expectation of the second intent for the network. In this case, the producer entity may determine, based on the record, that the expectation of the first intent for the network conflicts with the expectation of the second intent for the network. For example, no conflict handling has been performed for the first intent and the second intent. For example, the first priority information and the first trigger condition are carried in the intent creation request message used to create the first intent, and the producer entity has not created the first intent. In this case, the producer entity may determine, based on the expectation of the first intent for the network and the expectation of the second intent for the network, that the expectation of the first intent for the network conflicts with the expectation of the second intent for the network.

Step 405: The producer entity performs conflict handling for the first intent and the second intent based on the first priority.

In other words, when the expectation of the first intent for the network conflicts with the expectation of the second intent for the network, a priority change of the first intent may trigger the producer entity to perform the conflict handling for the first intent and the second intent.

When the first intent and the second intent are in different states, the producer entity performs the conflict handling for the first intent and the second intent based on the first priority in different manners. The following provides descriptions based on cases.

Case A: The first intent is in a suspended state, and the second intent is in an executed state. In other words, the first intent is in a de-activated state, and the second intent is in an activated state.

In the case A, a manner in which the producer entity performs the conflict handling for the first intent and the second intent based on the first priority may be as follows:
when the first priority is higher than a priority of the second intent, executing the first intent and suspending execution of the second intent; or
when the first priority is lower than or equal to a priority of the second intent, maintaining suspension of execution of the first intent and maintaining execution of the second intent.

In the case A, a manner in which the producer entity performs the conflict handling for the first intent and the second intent based on the first priority may alternatively be as follows:
when the first priority is higher than a priority of the second intent, executing the first intent and suspending execution of the second intent, where in other words, the first intent may preempt the second intent;
when the first priority is lower than a priority of the second intent, maintaining suspension of execution of the first intent and maintaining execution of the second intent, where in other words, the first intent cannot preempt the second intent; or
when the first priority is equal to a priority of the second intent, further performing the conflict handling for the first intent and the second intent based on an intent preemption capability of the first intent and an intent preemption protection capability of the second intent, where a manner of performing the conflict handling for the first intent and the second intent based on the intent preemption capability of the first intent and the intent preemption protection capability of the second intent may be as follows:
   when the intent preemption protection capability of the second intent is "preemptable" (in other words, the second intent supports preemption by another intent), and the intent preemption capability of the first intent is "be triggered" (in other words, the first intent supports preempting another intent), executing the first intent, and suspending execution of the second intent;
   when the intent preemption protection capability of the second intent is "not preemptable" (in other words, the second intent does not support preemption by another intent), maintaining suspension of execution of the first intent and maintaining execution of the second intent; or
   when the intent preemption protection capability of the second intent is "preemptable", and the intent preemption capability of the first intent is "shall be not triggered" (in other words, the first intent does not support preempting another intent), maintaining suspension of execution of the first intent and maintaining execution of the second intent.

It should be noted that executing the first intent and suspending the execution of the second intent may be understood as that the first intent can preempt the second intent, and the producer entity activates the first intent and de-activates the second intent. Maintaining the suspension of the execution of the first intent and maintaining the execution of the second intent may be understood as that the first intent cannot preempt the second intent, and the producer entity maintains the de-activated state of the first intent and maintains the activated state of the second intent.

A scenario in which the case A occurs is not limited in embodiments of this application.

In a possible scenario 1, the producer entity first creates and executes the first intent based on a request of the consumer entity, and then the consumer entity or another consumer entity determines that the second intent needs to be created, and requests the producer entity to create the second intent. The producer entity detects that an expectation of the to-be-created second intent for a network conflicts with an expectation of the created or existing first intent for the network. The producer entity performs conflict handling shown in FIG. 3 for the first intent and the second intent. A result of the conflict handling is that the second intent successfully preempts the first intent, and the producer entity creates and executes the second intent and suspends execution of the first intent.

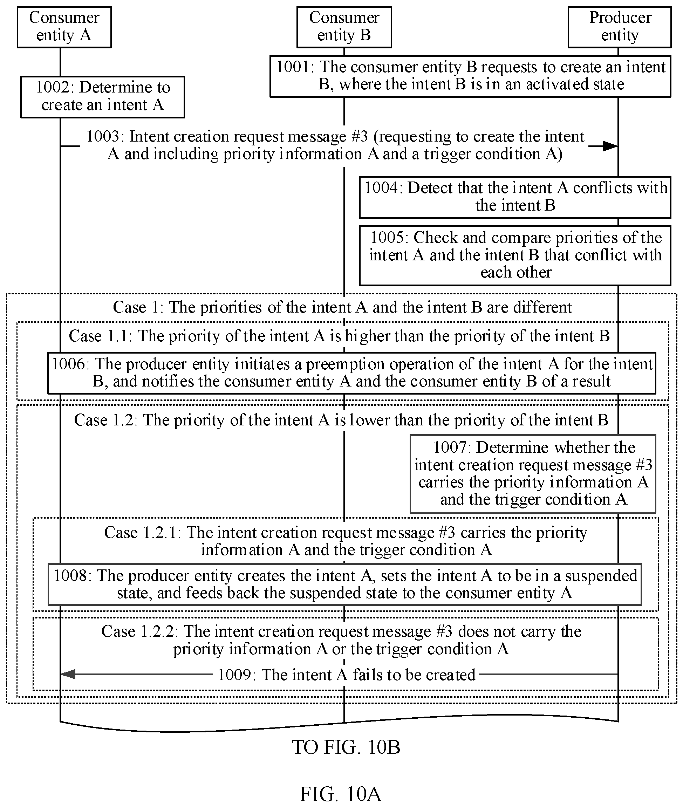

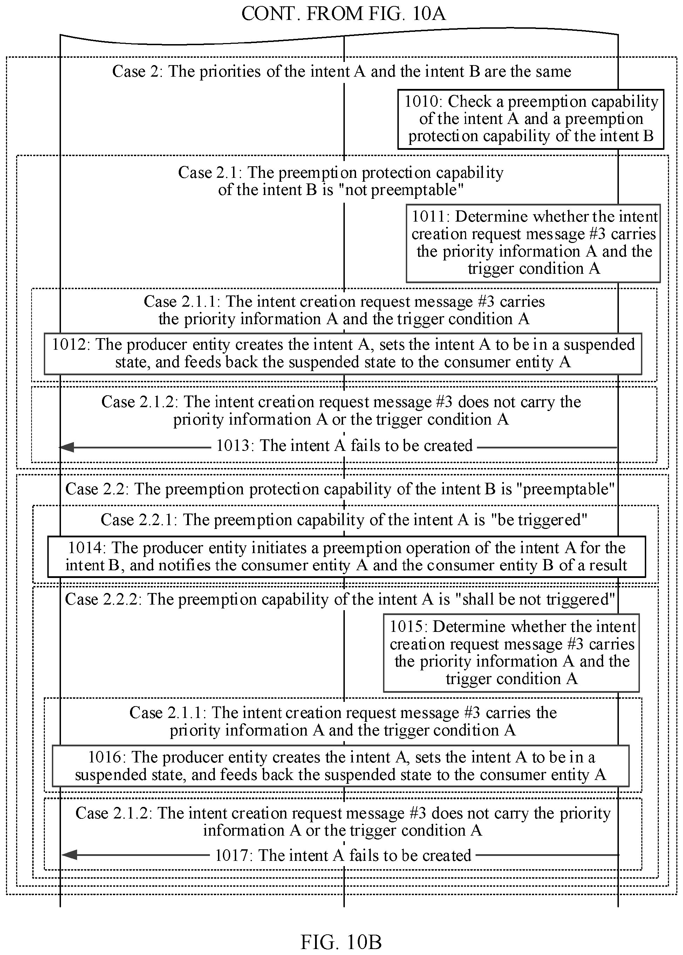

In another possible scenario 2, the producer entity first creates and executes the second intent based on a request of the consumer entity or another consumer entity, and then the consumer entity determines that the first intent needs to be created, and sends, to the producer entity, a first message used to create or request to create the first intent, where the first message includes a first trigger condition and optional first priority information. The producer entity detects that an expectation of the to-be-created first intent for a network conflicts with an expectation of the created or existing second intent for the network. The producer entity performs conflict handling for the first intent and the second intent. A result of the conflict handling is that the producer entity creates the first intent and suspends execution of the first intent, and maintains execution of the second intent. An implementation of the conflict handling mentioned in the scenario 2 is described in detail below with reference to FIG. 10A and FIG. 10B.

Case B: The first intent is in an executed state, and the second intent is in a suspended state. In other words, the first intent is in an activated state, and the second intent is in a de-activated state.

In the case B, a manner in which the producer entity performs the conflict handling for the first intent and the second intent based on the first priority may be as follows:
when the first priority is higher than or equal to a priority of the second intent, maintaining execution of the first intent and maintaining suspension of execution of the second intent; or
when the first priority is lower than a priority of the second intent, suspending execution of the first intent and executing the second intent.

In the case B, a manner in which the producer entity performs the conflict handling for the first intent and the second intent based on the first priority may alternatively be as follows:
when the first priority is higher than a priority of the second intent, maintaining execution of the first intent and maintaining suspension of execution of the second intent;
when the first priority is lower than a priority of the second intent, suspending execution of the first intent and executing the second intent; or
when the first priority is equal to a priority of the second intent, further performing the conflict handling for the first intent and the second intent based on an intent preemption capability of the second intent and an intent preemption protection capability of the first intent, where a manner of performing the conflict handling for the first intent and the second intent based on the intent preemption capability of the second intent and the intent preemption protection capability of the first intent may be as follows:
   when the intent preemption protection capability of the first intent is "not preemptable" (in other words, the first intent does not support preemption by another intent), maintaining execution of the first intent and maintaining suspension of execution of the second intent;
   when the intent preemption protection capability of the first intent is "preemptable" (in other words, the first intent supports preemption by another intent), and the intent preemption capability of the second intent is "shall be not triggered" (in other words, the second intent does not support preempting another intent), maintaining execution of the first intent and maintaining suspension of execution of the second intent; or
   when the intent preemption protection capability of the first intent is "preemptable", and the intent preemption capability of the second intent is "be triggered" (in other words, the second intent supports preempting another intent), suspending execution of the first intent and executing the second intent.

It should be noted that maintaining the execution of the first intent and maintaining the suspension of the execution of the second intent may be understood as that the second intent cannot preempt the first intent, and the producer entity maintains the activated state of the first intent and the de-activated state of the second intent. Suspending the execution of the first intent and executing the second intent may be understood as that the second intent can preempt the first intent, and the producer entity de-activates the first intent and activates the second intent.

A scenario in which the case B occurs is not limited in embodiments of this application.

In a possible scenario 3, the producer entity first creates and executes the second intent based on a request of the consumer entity or another consumer entity, and then the consumer entity determines that the first intent needs to be created, and sends, to the producer entity, a message used to create or request to create the first intent. The producer entity detects that an expectation of the to-be-created first intent for a network conflicts with an expectation of the created or existing second intent for the network. The producer entity performs conflict handling shown in FIG. 3 for the first intent and the second intent. A result of the conflict handling is that the first intent successfully preempts the second intent, and the producer entity creates and executes the first intent, and suspends execution of the second intent.

In another possible scenario 4, the producer entity creates and executes the first intent based on a request of the consumer entity, and then the consumer entity or another consumer entity determines that the second intent needs to be created, and requests the producer entity to create the second intent. A message used to create or request to create the second intent includes priority information and a trigger condition that are of the second intent and that are related to priority adjustment. The producer entity detects that an expectation of the to-be-created second intent for a network conflicts with an expectation of the created or existing first intent for the network. The producer entity performs conflict handling for the first intent and the second intent. A result of the conflict handling is that the producer entity creates the second intent and suspends execution of the second intent, and maintains execution of the first intent. An implementation of the conflict handling mentioned in the scenario 4 is described in detail below with reference to FIG. 10A and FIG. 10B.

Optionally, after step 405, the producer entity may further notify the consumer entity of the result of the conflict handling, for example, notify the consumer entity of the first intent of the activated state or the de-activated state of the first intent, and notify the consumer entity of the second intent of the de-activated state or the activated state of the second intent.

Optionally, after step 403, the producer entity may further perform step 406. Details are as follows:
Step 406: Re-adjust the priority of the first intent in response to determining that the first trigger condition is not met.

"In response to determining that the first trigger condition is not met" may be replaced with "when the first trigger condition is not met", "in response to the first trigger condition not being met", "determining that the first trigger condition is not met", or the like. This is not limited.

In this embodiment of this application, for the first intent, the consumer entity and the producer entity may maintain a combination of priority information and a trigger condition that is related to priority adjustment. In other words, the consumer entity and the producer entity maintain only a combination of priority information and a trigger condition that is related to the priority adjustment of the first intent, that is, the first priority information and the first trigger condition. In this case, as shown in FIG. 5, step 406 may include step 4061. To be specific, the producer entity may adjust the priority of the first intent from the first priority to a second priority by default when the first trigger condition is not met. Optionally, the second priority may be a priority of the first intent before adjustment of the priority of the first intent to the first priority. For example, the second priority may be a priority indicated by an intent priority (intent priority level) parameter of the first intent. In this case, "re-adjusting the priority of the first intent" may refer to restoring the priority of the first intent from the first priority to the second priority. Optionally, the second priority may be a default priority. The default priority may be the priority indicated by the intent priority level of the first intent, or may be a priority sent to the producer entity together with the first priority information and/or the first trigger condition.

For example, for an intent of the energy saving type, a constrained performance indicator may be an energy saving related performance indicator (for example, a network capacity indicator like physical resource block utilization or an activity factor). The first trigger condition is that the performance indicator is greater than or equal to a specific threshold. When the performance indicator is greater than or equal to the specific threshold, the producer entity determines that the first trigger condition is met, and adjusts the priority of the first intent from the second priority to the first priority. After a time period, the performance indicator changes to be less than the specific threshold, and the producer entity determines that the first trigger condition is no longer met, and restores the priority of the first intent from the first priority to the second priority.

In this embodiment of this application, for the first intent, the consumer entity and the producer entity may maintain a plurality of combinations of priority information and trigger conditions that are related to priority adjustment. In other words, in addition to the first priority information and the first trigger condition, the consumer entity and the producer entity may further maintain another combination of priority information and a trigger condition that is related to the priority adjustment of the first intent. In the plurality of combinations of the priority information and the trigger conditions that are related to the priority adjustment of the first intent, priorities indicated by a plurality of pieces of priority information are different, and a plurality of trigger conditions are not met simultaneously.

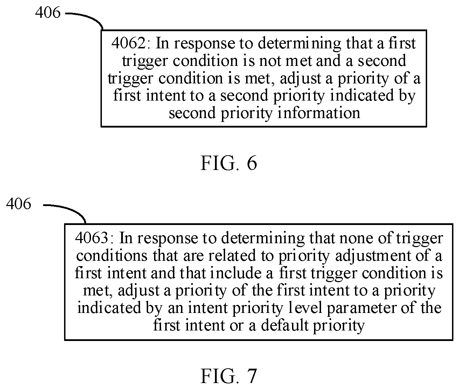

In a possible implementation, the combinations of the priority information and the trigger conditions that are related to the priority adjustment of the first intent includes a combination of the first priority information and the first trigger condition, and a combination of second priority information and a second trigger condition, where the second priority information indicates the second priority, and the second trigger condition is a condition for triggering adjustment of the priority of the first intent to the second priority. In this case, as shown in FIG. 6, step 406 may include step 4062. To be specific, in response to the first trigger condition not being met and the second trigger condition being met, the producer entity adjusts the priority of the first intent from the first priority to the second priority indicated by the second priority information.

Optionally, the second priority may be a priority different from both the first priority and a priority indicated by the intent priority level parameter of the first intent. For example, the first trigger condition and the second trigger condition may be constraint conditions for the performance indicator of the managed entity of the first intent. For example, for a network management intent of the energy saving type, a constrained performance indicator may be an energy saving related performance indicator. The first trigger condition is that the performance indicator is greater than or equal to a first threshold and less than a second threshold, and the second trigger condition is that the performance indicator is greater than or equal to the second threshold. When the performance indicator is greater than or equal to the second threshold, the producer entity determines that the first trigger condition is not met and the second trigger condition is met, and adjusts the first intent from the first priority to the second priority indicated by the second priority information.

Optionally, the second priority may be a priority of the first intent before adjustment of the priority of the first intent to the first priority. For example, the second priority may be a priority indicated by the intent priority level parameter of the first intent. In this case, "re-adjusting the priority of the first intent" may refer to restoring the priority of the first intent from the first priority to the second priority. For example, the first trigger condition and the second trigger condition may be constraint conditions for the performance indicator of the managed entity of the first intent. For example, for a network management intent of the energy saving type, a constrained performance indicator may be an energy saving related performance indicator. The first trigger condition is that the performance indicator is greater than or equal to a first threshold, and the second trigger condition is that the performance indicator is less than the first threshold. When the performance indicator is less than the first threshold, the producer entity determines that the first trigger condition is not met and the second trigger condition is met, and restores the first intent from the first priority to the second priority.

In another possible implementation, as shown in FIG. 7, step 406 may include step 4063. To be specific, in response to none of trigger conditions that are related to the priority adjustment of the first intent and that include the first trigger condition being met, the producer entity adjusts the priority of the first intent from the first priority to a priority indicated by the intent priority level parameter of the first intent or a default priority. The default priority may be a priority indicated by the intent priority level of the first intent, or may be a priority sent to the producer entity together with a plurality of combinations of priority information and/or trigger conditions that are related to the priority adjustment of the first intent.

For example, the plurality of combinations of the priority information and the trigger condition that are related to the priority adjustment of the first intent includes a combination of the first priority information and the first trigger condition and a combination of the second priority information and the second trigger condition, and the first trigger condition and the second trigger condition may be constraint conditions for the performance indicator of the managed entity of the first intent. For example, for a network management intent of the energy saving type, a constrained performance indicator may be an energy saving related performance indicator. The first trigger condition is that the performance indicator is greater than or equal to a first threshold and less than a second threshold, and the second trigger condition is that the performance indicator is greater than or equal to the second threshold. When the performance indicator is less than the first threshold, the producer entity determines that neither the first trigger condition nor the second trigger condition is met, and restores the first intent from the first priority to a priority indicated by the intent priority level parameter of the first intent or a default priority.

Optionally, after step 406, the producer entity may further perform step 407. Details are as follows:
Step 407: The producer entity performs the conflict handling for the first intent and the second intent based on an adjusted priority of the first intent.

In other words, when the expectation of the first intent for the network conflicts with the expectation of the second intent for the network, a priority change of the first intent may trigger the producer entity to perform the conflict handling for the first intent and the second intent.

When the first intent and the second intent are in different states, the producer entity performs the conflict handling for the first intent and the second intent based on the first priority in different manners. For an implementation of step 407, refer to step 405. A difference from step 405 is that the producer entity performs the conflict handling for the first intent and the second intent based on the adjusted priority of the first intent instead of the first priority.

Optionally, after step 407, the producer entity may further notify the consumer entity of a result of the conflict handling, for example, notify the consumer entity of the first intent of the activated state or the de-activated state of the first intent, and notify the consumer entity of the second intent of the de-activated state or the activated state of the second intent.

In this way, based on the foregoing technical solution, the consumer entity may provide, for the producer entity, a trigger condition related to priority adjustment of an intent, so that the producer entity can automatically adjust a priority of the intent when the condition for triggering the priority adjustment of the intent is met. This helps adjust the priority of the intent in a timely manner, to ensure service experience of a customer.

For ease of understanding of this embodiment of this application, the following provides detailed descriptions by using an example in which the intent creation request message carries one combination of priority information and a trigger condition that is related to priority adjustment of the intent.

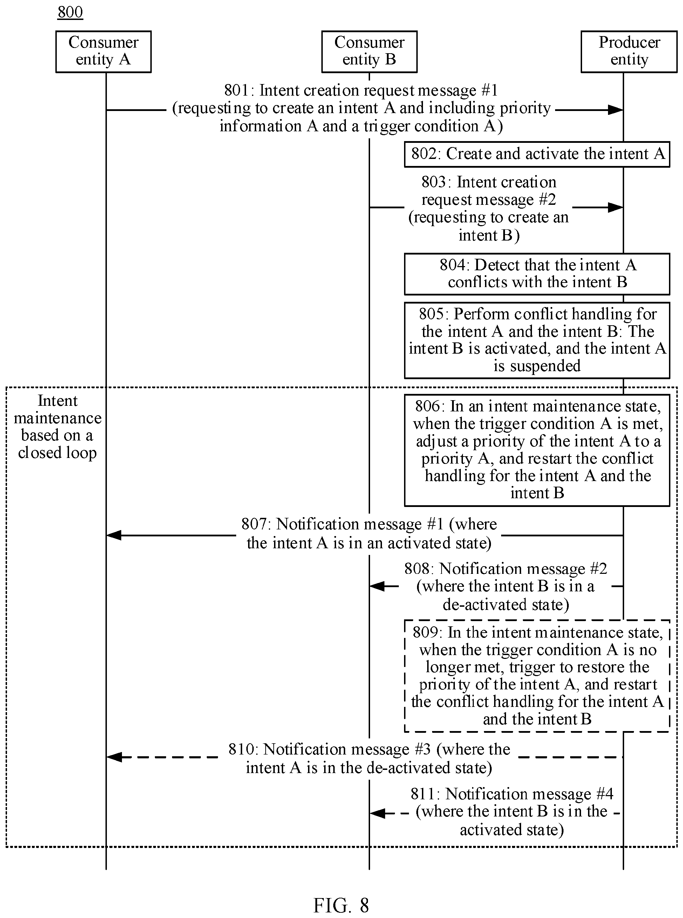

FIG. 8 is a schematic flowchart of a method 800 for managing a network management intent according to this application.

The method 800 describes an interaction procedure of automatically adjusting an intent priority in an intent creation scenario. An intent creation request message may carry priority information and a trigger condition that are related to intent priority adjustment, so that a producer entity automatically adjusts the intent priority. A consumer entity A, a consumer entity B, priority information A, or a trigger condition A in the method 800 may respectively correspond to the consumer entity, the another consumer entity, the first priority information, or the first trigger condition in the method 400.

Step 801: The consumer entity A sends an intent creation request message #1 to the producer entity, in other words, the producer entity receives the intent creation request message #1 from the consumer entity A.

The intent creation request message #1 is used to request to create an intent A, and the intent creation request message #1 includes the priority information A and the trigger condition A. The priority information A indicates a priority A. The trigger condition A is a condition for triggering the producer entity to adjust a priority of the intent A to the priority A.

For detailed descriptions of the priority information A and the trigger condition A, refer to the descriptions of the first priority information and the first trigger condition in step 401. For a manner in which the intent creation request message #1 carries the priority information A and the trigger condition A, refer to the manner in which the first message carries the first priority information and the first trigger condition in step 401. Details are not described again.

Step 802: The producer entity creates the intent A based on the intent creation request message #1, and activates the intent A.

The producer entity may execute the intent A in an activated state.

Step 803: The consumer entity B sends an intent creation request message #2 to the producer entity, in other words, the producer entity receives the intent creation request message #2 from the consumer entity B.

The intent creation request message #2 is used to request to create an intent B. The intent creation request message #2 may carry priority information B and a trigger condition B that are related to the intent B, or may not carry priority information B or a trigger condition B. This is not limited in embodiments of this application. For descriptions of the priority information B and the trigger condition B, refer to the descriptions of the first priority information and the first trigger condition in step 401. Details are not described again.

Step 804: The producer entity detects that the intent B conflicts with the intent A that is being executed.

The intent A is an existing intent, and the intent B is a to-be-created new intent.

Step 805: The producer entity performs conflict handling for the intent A and the intent B.

For a specific implementation in which the producer entity performs the conflict handling for the intent A and the intent B, refer to step 305 to step 311 in FIG. 3. In FIG. 8, an example in which the intent B successfully preempts the intent A is used.

After step 805, the intent A is suspended and is in a de-activated state, and the intent B is successfully created and activated and is in an activated state.

After step 805, an intent maintenance phase is entered. Intent maintenance in this embodiment of this application is intent maintenance based on a closed loop. The "closed loop" herein may mean that the producer entity performs analysis based on a performance indicator in a network and a condition for achieving the intent, and determines whether a target of the intent is achieved. The foregoing process is continuously performed. The following describes the intent maintenance in this embodiment of this application.

Step 806: In an intent maintenance state, the producer entity determines that the trigger condition A is met. The producer entity triggers priority adjustment of the intent A in response to determining that the trigger condition A is met, and adjusts the priority of the intent A to the priority A. The producer entity re-performs the conflict handling for the intent A and the intent B in response to the priority of the intent A being adjusted to the priority A.

The priority A may be higher than, equal to, or lower than a priority of the intent B. For a specific implementation in which the producer entity performs the conflict handling for the intent A and the intent B, refer to the conflict handling manner in the case A in FIG. 4.

In FIG. 8, an example in which the intent B is suspended and the intent A is re-activated is used. In this case, after step 806, the producer entity notifies the consumer entity A and the consumer entity B of a change of an intent state. Details are as follows:
Step 807: The producer entity sends a notification message #1 to the consumer entity A, in other words, the consumer entity A receives the notification message #1 from the producer entity.

The notification message #1 notifies that the intent A is in the activated state.

Step 808: The producer entity sends a notification message #2 to the consumer entity B, in other words, the consumer entity B receives the notification message #2 from the producer entity.

The notification message #2 notifies that the intent B is in the de-activated state.

Optionally, the method 800 may further include steps 809 to 811.

Step 809: In the intent maintenance state, the producer entity determines that the trigger condition A is no longer met. The producer entity triggers priority adjustment of the intent A in response to determining that the trigger condition A is no longer met, and restores the priority of the intent A to an initial priority. The producer entity re-performs the conflict handling for the intent A and the intent B in response to the priority of the intent A being restored to the initial priority.

For a specific implementation in which the producer entity performs the conflict handling for the intent A and the intent B, refer to the conflict handling manner in the case B in FIG. 4.

In FIG. 8, an example in which the intent A is suspended and the intent B is re-activated is used. In this case, after step 809, the producer entity notifies the consumer entity A and the consumer entity B of a change of an intent state. Details are as follows:
Step 810: The producer entity sends a notification message #3 to the consumer entity A, in other words, the consumer entity A receives the notification message #3 from the producer entity.

The notification message #3 notifies that the intent A is in the de-activated state.

Step 811: The producer entity sends a notification message #4 to the consumer entity B, in other words, the consumer entity B receives the notification message #4 from the producer entity.

The notification message #4 notifies that the intent B is in the activated state.

In the method 800, the consumer entity includes, in an intent creation request message, priority information and a trigger condition that are related to intent priority adjustment, so that the producer entity can automatically adjust a priority of an intent in an intent maintenance phase based on a change of a network environment and a meeting status of the trigger condition. In this way, conflict handling between conflicting intents is triggered again, and related intents are automatically activated and suspended. Based on the method, a case in which the priority of the intent is not adjusted in a timely manner because an emergency is not perceived in a timely manner and/or operation and maintenance personnel do not perform operations in a timely manner can be avoided. This helps improve network operation and maintenance efficiency and service experience of a customer.

For ease of understanding of this embodiment of this application, the following provides detailed descriptions by using an example in which an intent modification request message carries priority information and a trigger condition that are related to priority adjustment of an intent.

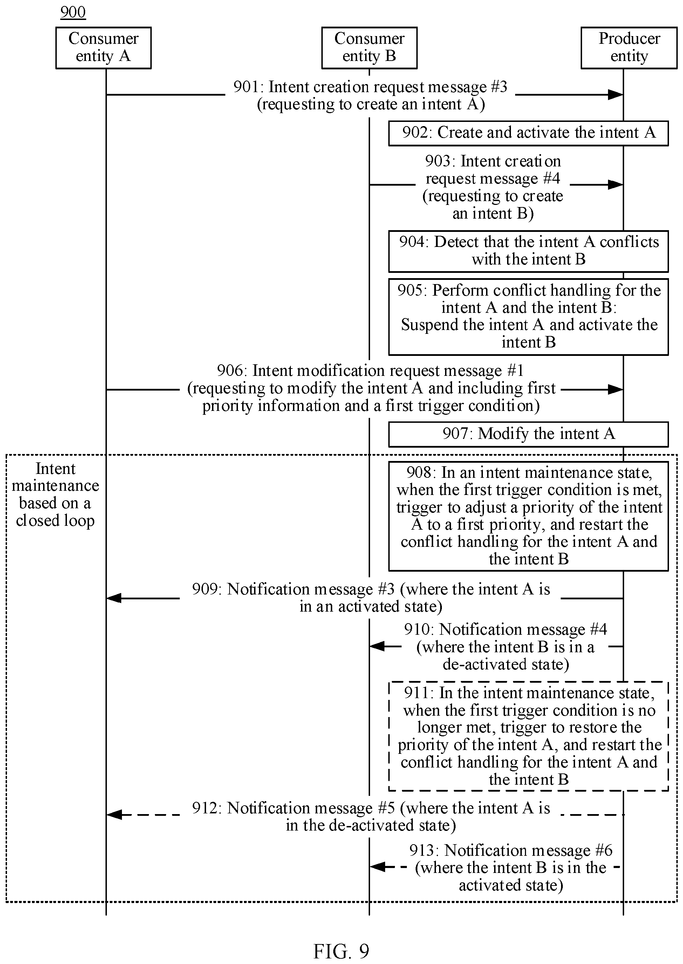

FIG. 9 is a schematic flowchart of a method 900 for managing a network management intent according to this application.

The method 900 describes an interaction procedure of automatically adjusting an intent priority in an intent modification scenario. An intent modification request message may carry priority information and a trigger condition that are related to intent priority adjustment, so that a producer entity automatically adjusts the intent priority. A consumer entity A, a consumer entity B, priority information A, a trigger condition A, priority information A1, or a trigger condition A1 in the method 900 may respectively correspond to the consumer entity, the another consumer entity, the first priority information, the first trigger condition, the second priority information, or the second trigger condition in the method 400.

Step 901: The consumer entity A sends an intent creation request message #3 to the producer entity, in other words, the producer entity receives the intent creation request message #3 from the consumer entity A.

The intent creation request message #3 is used to request to create an intent A.

Step 902: The producer entity creates the intent A based on the intent creation request message #1, and activates the intent A.

The producer entity may execute the intent A in an activated state.

Step 903: The consumer entity B sends an intent creation request message #4 to the producer entity, in other words, the producer entity receives the intent creation request message #4 from the consumer entity B.

The intent creation request message #4 is used to request to create an intent B.

Step 904: The producer entity detects that the intent B conflicts with the intent A that is being executed.

The intent A is an existing intent, and the intent B is a to-be-created new intent.

Step 905: The producer entity performs conflict handling for the intent A and the intent B.

For a specific implementation in which the producer entity performs the conflict handling for the intent A and the intent B, refer to step 305 to step 311 in FIG. 3. In FIG. 9, an example in which the intent B successfully preempts the intent A is used.

After step 905, the intent A is suspended and is in a de-activated state, and the intent B is successfully created and activated and is in an activated state.

Step 906: The consumer entity A sends an intent modification request message #1 to the producer entity, in other words, the producer entity receives the intent modification request message #1 from the consumer entity A.

The intent modification request message #1 is used to request to modify the intent A, and the intent creation request message includes the priority information A and the trigger condition A. The priority information A indicates a priority A. The trigger condition A is a condition for triggering the producer entity to adjust a priority of the intent A to the priority A.

For detailed descriptions of the priority information A and the trigger condition A, refer to the descriptions of the first priority information and the first trigger condition in step 401. For a manner in which the intent modification request message #1 carries the priority information A and the trigger condition A, refer to the manner in which the first message carries the first priority information and the first trigger condition in step 401. Details are not described again.

It should be noted that whether the intent creation request message #3 carries the priority information A1 and the trigger condition A1 that are related to the intent A is not limited in embodiments of this application. If the intent creation request message #3 carries the priority information A1 and the trigger condition A1 that are related to the intent A, the intent modification request message #1 may include the priority information A and/or the trigger condition A.

It should be further noted that, in this embodiment of this application, whether the intent creation request message #4 carries priority information B and a trigger condition B that are related to the intent B is not limited either.

Step 907: The producer entity modifies the intent A based on the intent modification request message #1.

If the intent creation request message #3 carries the priority information A1 and the trigger condition A1 that are related to the intent A, the producer entity modifies the priority information A1 and the trigger condition A1 to the priority information A and the trigger condition A.

If the intent creation request message #3 does not carry the priority information A1 or the trigger condition A1 that is related to the intent A, the producer entity adds the priority information A and the trigger condition A to the intent A.

After step 907, an intent maintenance phase based on a closed loop is entered. For step 908 to step 913, refer to step 806 to step 811 in FIG. 8. Details are not described again.

In the method 900, the consumer entity includes, in an intent modification request message, priority information and a trigger condition that are related to intent priority adjustment, so that the producer entity can automatically adjust a priority of an intent in an intent maintenance phase based on a change of a network environment and a meeting status of the trigger condition. In this way, conflict handling between conflicting intents is triggered again, and related intents are automatically activated and suspended. Based on the method, a case in which the priority of the intent is not adjusted in a timely manner because an emergency is not perceived in a timely manner and/or operation and maintenance personnel do not perform operations in a timely manner can be avoided. This helps improve network operation and maintenance efficiency and service experience of a customer.

The following describes in detail implementations of the conflict handling in the scenario 2 and the scenario 4 in the method 400 with reference to FIG. 10A and FIG. 10B. In the scenario 2, a consumer entity A, a consumer entity B, an intent A, an intent B, priority information A, or a trigger condition A in the method 1000 may respectively correspond to the consumer entity, the another consumer entity, the first intent, the second intent, the first priority information, or the first trigger condition in the method 400. In the scenario 4, a consumer entity A, a consumer entity B, an intent A, an intent B, priority information A, or a trigger condition A in the method 1000 may respectively correspond to the another consumer entity, the consumer entity, the second intent, the first intent, the priority information that is of the second intent and that is related to the priority adjustment, or the trigger condition that is of the second intent and that is related to priority adjustment in the method 400.

FIG. 10A and FIG. 10B are a schematic flowchart of intent conflict handling in an intent creation procedure according to this application.

Step 1001: The consumer entity B requests a producer entity to create the intent B, where the intent B is in an activated state.

In other words, the producer entity creates the intent B based on a request of the consumer entity B, and executes the intent B.

Step 1002: The consumer entity A determines to create the intent A.

Step 1003: The consumer entity A sends an intent creation request message #3 to the producer entity, in other words, the producer entity receives the intent creation request message #3 from the consumer entity A.

The intent creation request message #3 is used to request to create the intent A, and the intent creation request message #3 includes the priority information A and the trigger condition A. The priority information A indicates a priority A. The trigger condition A is a condition for triggering the producer entity to adjust a priority of the intent A to the priority A. For detailed descriptions of the priority information A and the trigger condition A, refer to the descriptions of the first priority information and the first trigger condition in step 401. For a manner in which the intent creation request message #3 carries the priority information A and the trigger condition A, refer to the manner in which the first message carries the first priority information and the first trigger condition in step 401. Details are not described again.

Step 1004: The producer entity detects that the intent A conflicts with the intent B that is being executed.

The intent B is an existing intent, and the intent A is a to-be-created new intent.

Step 1005: The producer entity checks and compares priorities of the intent A and the intent B that conflict with each other.

Specifically, the producer entity compares a value of an intent priority level parameter of the intent A with a value of an intent priority level parameter of the intent B.

There may be two comparison results, as shown in a case 1 and a case 2 below.

Case 1: The priorities of the intent A and the intent B are different. For example, the value of the intent priority level parameter of the intent A is different from the value of the intent priority level parameter of the intent B.

In the case 1, there may be a case 1.1 and a case 1.2. Details are as follows:
Case 1.1: The priority of the intent A is higher than the priority of the intent B. For example, the value of the intent priority level parameter of the intent A is greater than the value of the intent priority level parameter of the intent B.

If the priority of the intent A is higher than the priority of the intent B, the intent A may preempt the intent B, and step 1006 may be subsequently performed. Step 1006 is as follows:
Step 1006: The producer entity initiates a preemption operation of the intent A for the intent B, and notifies the consumer entity A and the consumer entity B of a result.

Case 1.2: The priority of the intent A is lower than the priority of the intent B. For example, the value of the intent priority level parameter of the intent A is less than the value of the intent priority level parameter of the intent B.

If the priority of the intent A is lower than the priority of the intent B, step 1007 may be subsequently performed. Step 1007 is as follows:
Step 1007: The producer entity determines whether the intent creation request message #3 carries the priority information A and the trigger condition A.

There may be two determining results, as shown in a case 1.2.1 and a case 1.2.2 below.

Case 1.2.1: The intent creation request message #3 carries the priority information A and the trigger condition A.

If the intent creation request message #3 carries the priority information A and the trigger condition A, the producer entity may create the intent A, but needs to suspend the intent A. Details are shown in step 1008.

Step 1008: The producer entity creates the intent A, sets the intent A to be in a de-activated state, and notifies the consumer entity A that the intent A is in the de-activated state.

Case 1.2.2: The intent creation request message #3 does not carry the priority information A or the trigger condition A.

If the intent creation request message #3 does not carry the priority information A or the trigger condition A, the producer entity skips creating the intent A, and may subsequently perform step 1009. Step 1009 is as follows:
Step 1009: The producer entity skips creating the intent #A, and indicates, to the consumer entity #1, that the intent A fails to be created.

Case 2: The priorities of the intent A and the intent B are the same. For example, the value of the intent priority level parameter of the intent A is the same as the value of the intent priority level parameter of the intent B.

When the priorities of the intent A and the intent B are the same, the producer entity may further perform conflict handling based on an intent preemption protection capability of the intent B and an intent preemption capability of the intent A. The producer entity may perform step 1010. Step 1010 is as follows:
Step 1010: The producer entity checks the intent preemption protection capability of the intent B and the intent preemption capability of the intent A, and further performs the conflict handling based on the intent preemption protection capability of the intent B and the intent preemption capability of the intent A.

Specifically, the producer entity obtains and checks a value of an intent preemption protection parameter of the intent B and a value of an intent preemption capability parameter of the intent A, and then performs the conflict handling based on the value of the intent preemption protection parameter of the intent B and the value of the intent preemption capability parameter of the intent A.

In this way, based on the intent preemption protection capability of the intent B, the case 2 may further include a case 2.1 and a case 2.2. Details are as follows:
Case 2.1: The intent preemption protection capability of the intent B is "not preemptable". For example, the value of the intent preemption protection parameter of the intent B is "not preemptable".

If the intent preemption protection capability of the intent B is "not preemptable", the producer entity may subsequently further perform the conflict handling depending on whether the intent creation request message #3 carries the priority information A and the trigger condition A. Specifically, step 1011 to step 1013 may be performed. For step 1011 to step 1013, refer to step 1007 to step 1009. Details are not described again.

Case 2.2: The intent preemption protection capability of the intent B is "preemptable". For example, the value of the intent preemption protection parameter of the intent B is "preemptable". Based on the preemption capability of the intent B, the case 2.2 may further include a case 2.2.1 and a case 2.2.2. Details are as follows:
Case 2.2.1: The intent preemption capability of the intent #A is "be triggered". For example, the value of the intent preemption capability parameter of the intent A is "be triggered". In this case, the intent A may preempt the intent B, and step 1014 may be subsequently performed. For step 1014, refer to step 1006. Details are not described again.

Case 2.2.2: The intent preemption capability of the intent A is "shall be not triggered". For example, the value of the intent preemption capability parameter of the intent A is "shall be not triggered".

If the intent preemption capability of the intent A is "shall be not triggered", the producer entity may subsequently further perform the conflict handling depending on whether the intent creation request message #3 carries the priority information A and the trigger condition A. Specifically, step 1015 to step 1017 may be performed. For step 1015 to step 1017, refer to step 1007 to step 1009. Details are not described again.

It should be noted that, in the method 1000, an example in which the intent creation request message #3 carries both the priority information A and the trigger condition A is used. When the priority information A is information that has been learned of by both the consumer entity A and the producer entity, for example, the priority information A is preconfigured or predefined, the intent creation request message #3 may not carry the priority information A. When the intent creation request message #3 carries the trigger condition A, but does not carry the priority information A, steps 1007, 1015, and 1017 may be replaced with: determining whether the intent creation request message #3 carries the trigger condition A.

In the method 1000, a type of determining branch is added to the intent conflict handling. An operation of creating and suspending the intent A that cannot preempt the intent B temporarily is performed, without a creation failure, and a corresponding intent state is fed back to the consumer entity in a timely manner.

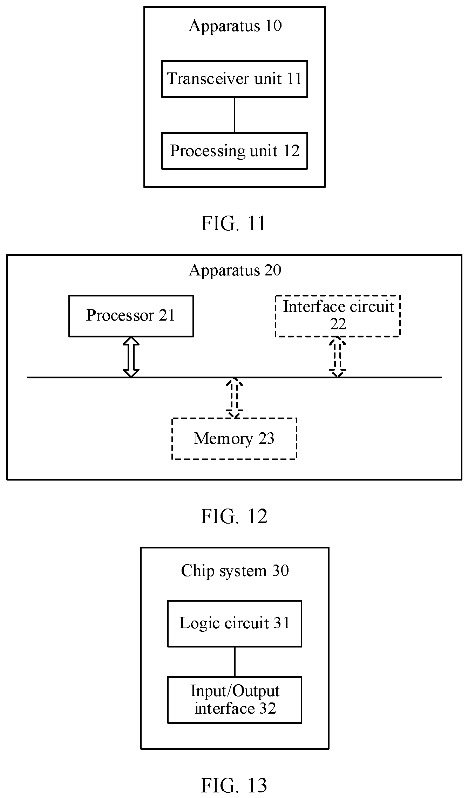

The foregoing describes in detail the method embodiments provided in this application with reference to FIG. 4 to FIG. 10A and FIG. 10B. The following describes apparatus embodiments of this application with reference to FIG. 11 to FIG. 13.

It may be understood that, to implement functions in the foregoing embodiments, apparatuses in FIG. 11 to FIG. 13 include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software.

FIG. 11 and FIG. 12 are diagrams of structures of possible apparatuses according to embodiments of this application. These apparatuses may be configured to implement functions of the producer entity or the consumer entity in the foregoing method embodiments, and therefore can also implement beneficial effects of the foregoing method embodiments.

As shown in FIG. 11, an apparatus 10 includes a transceiver unit 11 and a processing unit 12.

When the apparatus 10 is configured to implement the functions of the producer entity in the foregoing method embodiments, the transceiver unit 11 is configured to perform receiving and sending steps of the consumer entity, for example, step 401, step 402, step 801, step 807, step 810, step 901, step 906, step 909, step 912, step 1003, step 1009, step 1013, or step 1017, or for another example, step 401, step 402, step 803, step 808, step 811, step 903, or step 913. The processing unit 12 is configured to perform a processing step of the producer entity, for example, step 1002. When the apparatus 10 is configured to implement the functions of the consumer entity in the foregoing method embodiments, the transceiver unit 11 is configured to perform receiving and sending steps of the producer entity, for example, step 401, step 402, step 801, step 803, step 807, step 808, step 810, step 811, step 901, step 903, step 906, step 909, step 910, step 912, step 913, step 1003, step 1009, step 1013, or step 1017. The processing unit 12 is configured to perform a processing step of the consumer entity, for example, steps 403 to 407, step 802, steps 804 to 806, step 809, step 902, step 904, step 905, step 907, step 908, step 911, step 1001, steps 1004 to 1008, steps 1010 to 1012, or steps 1014 to 1016.

For more detailed descriptions of the transceiver unit 11 and the processing unit 12, refer to related descriptions in the foregoing method embodiments. Details are not described herein again.

As shown in FIG. 12, an apparatus 20 may include a processor 21. The processor 21 is coupled to a memory 23. The memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions, to implement the function of the foregoing processing unit 12, and the interface circuit 22 is configured to implement a function of the foregoing transceiver unit 11.

For example, when the apparatus 20 is a chip used in a producer entity or a consumer entity, the chip implements a function of the producer entity or the consumer entity in the foregoing method embodiments. The chip receives information from another module (for example, a radio frequency module or an antenna) in the producer entity or the consumer entity, where the information is sent by another apparatus to the producer entity or the consumer entity. Alternatively, the chip sends information to another module (for example, a radio frequency module or an antenna) in the producer entity or the consumer entity, where the information is sent by the producer entity or the consumer entity to another apparatus.

FIG. 13 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the producer entity or the consumer entity in the foregoing method embodiments.

For example, the logic circuit 31 is configured to implement a processing related operation performed by the producer entity or the consumer entity in the foregoing method embodiments. The input/output interface 32 is configured to implement a sending and/or receiving related operation performed by the producer entity or the consumer entity in the foregoing method embodiments.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a chip, including a processor. The processor is coupled to a memory. The memory is configured to store a computer program or instructions. The processor is configured to execute the computer program or the instructions stored in the memory, to implement the method performed by the producer entity or the consumer entity in the foregoing method embodiments.

This application further provides a computer-readable storage medium. The computer-readable storage medium stores computer instructions used to implement the method performed by the producer entity or the consumer entity in the foregoing method embodiments.

This application further provides a computer program product, including instructions. When the instructions are executed by a computer, the method performed by the producer entity or the consumer entity in the foregoing method embodiments is implemented.

This application further provides a communication system. The communication system includes at least one of the producer entity or the consumer entity in the foregoing embodiments.

For explanations and beneficial effects of related content in any one of the apparatuses provided above, refer to the corresponding method embodiments provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a producer entity or a consumer entity. Certainly, the processor and the storage medium may alternatively exist as discrete components in the producer entity or the consumer entity.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a dedicated computer, a computer network, a network equipment, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Unless otherwise stated, meanings of all technical and scientific terms used in embodiments of this application are the same as those usually understood by a person skilled in the technical field of this application. The terms used in this application are merely intended to describe specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

## Claims

1. A method for managing a network management intent, wherein the method comprises:
receiving a first trigger condition, wherein the first trigger condition is a condition for triggering adjustment of a priority of a first network management intent to a first priority; and
adjusting the priority of the first network management intent to the first priority in response to determining that the first trigger condition is met.

2. The method according to claim 1, wherein the method further comprises:
determining that an expectation of the first network management intent for a network conflicts with an expectation of a second network management intent for the network; and
performing conflict handling for the first network management intent and the second network management intent based on the first priority.

3. The method according to claim 2, wherein the first network management intent is in a suspended state, the second network management intent is in an executed state, and performing the conflict handling for the first network management intent and the second network management intent based on the first priority comprises:
when the first priority is higher than a priority of the second network management intent, executing the first network management intent and suspending execution of the second network management intent;
when the first priority is lower than a priority of the second network management intent, maintaining suspension of execution of the first network management intent and maintaining execution of the second network management intent; or
when the first priority is equal to a priority of the second network management intent, maintaining suspension of execution of the first network management intent and maintaining execution of the second network management intent, or performing the conflict handling for the first network management intent and the second network management intent based on an intent preemption capability of the first network management intent and an intent preemption protection capability of the second network management intent.

4. The method according to claim 3, wherein performing the conflict handling for the first network management intent and the second network management intent based on the intent preemption protection capability of the second network management intent and the intent preemption capability of the first network management intent comprises:
when the second network management intent supports preemption by another network management intent and the first network management intent supports preempting another network management intent, executing the first network management intent, and suspending the execution of the second network management intent;
when the second network management intent does not support preemption by another network management intent, maintaining the suspension of the execution of the first network management intent and maintaining the execution of the second network management intent; or
when the second network management intent supports preemption by another network management intent, and the first network management intent does not support preempting another network management intent, maintaining the suspension of the execution of the first network management intent and maintaining the execution of the second network management intent.

5. The method according to claim 2, wherein the second network management intent is in an executed state, the second network management intent is in a suspended state, and performing the conflict handling for the first network management intent and the second network management intent based on the first priority comprises:
when the first priority is higher than a priority of the second network management intent, maintaining execution of the first network management intent and maintaining suspension of execution of the second network management intent;
when the first priority is lower than a priority of the second network management intent, suspending execution of the first network management intent and executing the second network management intent; or
when the first priority is equal to a priority of the second network management intent, maintaining execution of the first network management intent and maintaining suspension of execution of the second network management intent, or performing the conflict handling for the first network management intent and the second network management intent based on an intent preemption protection capability of the first network management intent and an intent preemption capability of the second network management intent.

6. The method according to claim 5, wherein performing the conflict handling for the first network management intent and the second network management intent based on the intent preemption protection capability of the first network management intent and the intent preemption capability of the second network management intent comprises:
when the first network management intent does not support preemption by another network management intent, maintaining the execution of the first network management intent and maintaining the suspension of the execution of the second network management intent;
when the first network management intent supports preemption by another network management intent and the second network management intent does not support preempting another network management intent, maintaining the execution of the first network management intent and maintaining the suspension of the execution of the second network management intent; or
when the first network management intent supports preemption by another network management intent and the second network management intent supports preempting another network management intent, suspending the execution of the first network management intent, and executing the second network management intent.

7. The method according to any one of claims 1 to 6, wherein the method further comprises:
restoring the priority of the first network management intent to a second priority in response to determining that the first trigger condition is not met, wherein the second priority is a priority of the first network management intent before adjustment to the first priority.

8. The method according to claim 7, wherein the method further comprises:
determining that the expectation of the first network management intent for the network conflicts with the expectation of the second network management intent for the network; and
performing the conflict handling for the first network management intent and the second network management intent based on the second priority.

9. The method according to any one of claims 1 to 8, wherein the first trigger condition comprises at least one of the following conditions:
a constraint condition for a performance indicator of a managed entity of the first network management intent, a time constraint condition, an area constraint condition, a constraint condition for a configuration indicator of a managed entity of the first network management intent, or a weather constraint condition.

10. The method according to any one of claims 1 to 9, wherein the method further comprises:
receiving first priority information, wherein the first priority information indicates the first priority.

11. The method according to claim 10, wherein receiving the first trigger condition and receiving the first priority information comprise:
receiving a first message, wherein the first message is used to request to create the first network management intent, wherein
the first message comprises the first network management intent, the first priority information, and the first trigger condition; or the first message comprises the first network management intent, and the first network intent comprises the first priority information and the first trigger condition.

12. The method according to claim 11, wherein
before receiving the first message, the method further comprises: creating and executing the second network management intent; and
before adjusting the priority of the first network management intent to the first priority, the method further comprises: determining that the expectation of the first network management intent for the network conflicts with the expectation of the second network management intent for the network; and performing the conflict handling for the first network management intent and the second network management intent based on the second priority, wherein the second priority is the priority of the first network management intent before adjustment to the first priority.

13. The method according to claim 12, wherein performing the conflict handling for the first network management intent and the second network management intent based on the second priority comprises:
when the second priority is higher than the priority of the second network management intent, creating and executing the first network management intent, and suspending the execution of the second network management intent;
when the second priority is lower than the priority of the second network management intent, based on the first message carrying the first priority information and the first trigger condition, creating the first network management intent and suspending the execution of the first network management intent, and maintaining the execution of the second network management intent; or
when the second priority is equal to the priority of the second network management intent, based on the first message carrying the first priority information and the first trigger condition, creating the first network management intent and suspending the execution of the first network management intent, and maintaining the execution of the second network management intent; or performing the conflict handling for the first network management intent and the second network management intent based on the intent preemption protection capability of the second network management intent and the intent preemption capability of the first network management intent.

14. The method according to claim 13, wherein performing the conflict handling for the first network management intent and the second network management intent based on the intent preemption protection capability of the first network management intent and the intent preemption capability of the second network management intent comprises:
when the second network management intent does not support preemption by another network management intent, based on the first message carrying the first priority information and the first trigger condition, creating the first network management intent and suspending the execution of the first network management intent, and maintaining the execution of the second network management intent;
when the second network management intent supports preemption by another network management intent and the first network management intent does not support preempting another network management intent, based on the first message carrying the first priority information and the first trigger condition, creating the first network management intent and suspending the execution of the first network management intent, and maintaining the execution of the second network management intent; or
when the second network management intent supports preemption by another network management intent and the first network management intent supports preempting another network management intent, creating and executing the first network management intent, and suspending the execution of the second network management intent.

15. The method according to claim 10, wherein receiving the first trigger condition and receiving the first priority information comprise:
receiving a first message, wherein the first message is used to request to modify the first network management intent, wherein
the first message comprises an identifier of the first network management intent, the first priority information, and the first trigger condition; or the first message comprises a modified first network management intent, the first priority information, and the first trigger condition; or the first message comprises a modified first network management intent, and the modified first network management intent comprises the first priority information and the first trigger condition.

16. The method according to claim 15, wherein after receiving the first message, the method further comprises:
modifying the first network management intent based on the first message, wherein the modified first network management intent comprises the first priority information and the first trigger condition.

17. The method according to claim 16, wherein
the first network management intent that is not modified comprises second priority information and a second trigger condition, the second priority information indicates a third priority, and the second trigger condition is a condition for triggering adjustment of the priority of the first network management intent to the third priority; and
modifying the first network management intent based on the first message comprises: modifying, based on the first message, the second priority information and the second trigger condition that are comprised in the first network management intent to the first priority information and the first trigger condition.

18. A method for managing a network management intent, wherein the method comprises:
determining a first trigger condition, wherein the first trigger condition is a condition for triggering adjustment of a priority of a first network management intent to a first priority; and
sending the first trigger condition.

19. The method according to claim 18, wherein the method further comprises:
determining first priority information, wherein the first priority information indicates the first priority; and
sending the first priority information.

20. The method according to claim 19, wherein sending the first trigger condition and sending the first priority information comprise:
sending a first message, wherein the first message is used to request to create the first network management intent, wherein
the first message comprises the first network management intent, the first priority information, and the first trigger condition; or the first message comprises the first network management intent, and the first network intent comprises the first priority information and the first trigger condition.

21. The method according to claim 19, wherein sending the first trigger condition and sending the first priority information comprise:
sending a first message, wherein the first message is used to request to modify the first network management intent, wherein
the first message comprises an identifier of the first network management intent, the first priority information, and the first trigger condition; or the first message comprises a modified first network management intent, the first priority information, and the first trigger condition; or the first message comprises a modified first network management intent, and the modified first network management intent comprises the first priority information and the first trigger condition.

22. The method according to claim 21, wherein
the first network management intent that is not modified comprises second priority information and a second trigger condition, the second priority information indicates a third priority, and the second trigger condition is a condition for triggering adjustment of the priority of the first network management intent to the third priority.

23. The method according to any one of claims 18 to 22, wherein the first trigger condition comprises at least one of the following conditions:
a constraint condition for a performance indicator of a managed entity of the first network management intent, a time constraint condition, an area constraint condition, a constraint condition for a configuration indicator of a managed entity of the first network management intent, or a weather constraint condition.

24. A method for managing a network management intent, wherein the method comprises:
sending, by a consumer entity, a first trigger condition, wherein the first trigger condition is a condition for triggering adjustment of a priority of a first network management intent to a first priority;
receiving, by a producer entity, the first trigger condition; and
adjusting, by the producer entity, the priority of the first network management intent to the first priority in response to determining that the first trigger condition is met.

25. The method according to claim 24, wherein the method further comprises:
sending, by the consumer entity, first priority information, wherein the first priority information indicates the first priority; and
receiving, by the producer entity, the first priority information.

26. The method according to claim 25, wherein the method further comprises:
determining that an expectation of the first network management intent for a network conflicts with an expectation of a second network management intent for the network; and
performing conflict handling for the first network management intent and the second network management intent based on the first priority.

27. The method according to any one of claims 24 to 26, wherein the first trigger condition comprises at least one of the following conditions:
a constraint condition for a performance indicator of a managed entity of the first network management intent, a time constraint condition, an area constraint condition, a constraint condition for a configuration indicator of a managed entity of the first network management intent, or a weather constraint condition.

28. An apparatus for managing a network management intent, wherein the apparatus comprises a transceiver unit and a processing unit, wherein
the transceiver unit is configured to receive a first trigger condition, wherein the first trigger condition is a condition for triggering adjustment of a priority of a first network management intent to a first priority; and
the processing unit is configured to adjust the priority of the first network management intent to the first priority in response to determining that the first trigger condition is met.

29. An apparatus for managing a network management intent, wherein the apparatus comprises a transceiver unit and a processing unit, wherein
the processing unit is configured to determine a first trigger condition, wherein the first trigger condition is a condition for triggering adjustment of a priority of a first network management intent to a first priority; and
the transceiver unit is configured to send the first trigger condition.

30. A communication apparatus, comprising a module or a unit configured to perform the method according to any one of claims 1 to 27.

31. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 27 by using a logic circuit or by executing code instructions.

32. The communication apparatus according to claim 31, wherein the communication apparatus is a chip or a chip system.

33. A computer-readable storage medium, wherein the storage medium stores a computer program or instructions, and when the computer program or the instructions are executed by a communication apparatus, the method according to any one of claims 1 to 27 is implemented.

34. A computer program product, comprising a computer program, wherein when the computer program is run, the method according to any one of claims 1 to 27 is implemented.

35. A communication system, comprising:
a communication apparatus configured to perform the method according to any one of claims 1 to 17; and
a communication apparatus configured to perform the method according to any one of claims 18 to 23.
